(19) Europäisches Patentamt / European Patent Office / Office européen des brevets

(11) **EP 4 391 677 A1**

(12) **EUROPEAN PATENT APPLICATION**
published in accordance with Art. 153(4) EPC

(43) Date of publication:
**26.06.2024 Bulletin 2024/26**

(21) Application number: **21953713.1**

(22) Date of filing: **18.08.2021**

(51) International Patent Classification (IPC):
**H04W 72/04** $^{(2023.01)}$    **H04W 72/12** $^{(2023.01)}$

(52) Cooperative Patent Classification (CPC):
**H04W 72/04; H04W 72/12**

(86) International application number:
**PCT/CN2021/113220**

(87) International publication number:
**WO 2023/019465 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHAO, Zhenshan**
  **Dongguan, Guangdong 523860 (CN)**
• **ZHANG, Shichang**
  **Dongguan, Guangdong 523860 (CN)**

(74) Representative: **Ipside**
**7-9 Allée Haussmann**
**33300 Bordeaux Cedex (FR)**

(54) **WIRELESS COMMUNICATION METHOD AND TERMINAL DEVICE**

(57)    Provided in the embodiments of the present application are a wireless communication method and a terminal device, by means of which method and device the optimal spatial domain sending filter between a sending-end terminal and a receiving-end terminal can be selected. The wireless communication method comprises: a first terminal device sending M CSI-RSs to a second terminal device by using a spatial domain sending filter, wherein the M CSI-RSs are used for selecting a target spatial domain sending filter, the M CSI-RSs correspond to a plurality of CSI-RS resources in a target CSI-RS resource set, and M is a positive integer.

**200**

The first terminal device transmits M CSI-RSs to the second terminal device by using spatial domain transmission filters. The M CSI-RSs are used for selecting a target spatial domain transmission filter. The M CSI-RSs correspond to multiple CSI-RS resources in a target CSI-RS resource set, and M is a positive integer — S210

The second terminal device receives the M CSI-RSs transmitted by the first terminal device using the spatial domain transmission filters — S220

**FIG. 13**

**Description**

TECHNICAL FIELD

Embodiments of the present disclosure relate to the field of communication, and in particular to a method for wireless communication and a terminal device.

BACKGROUND

In order to improve the transmission rate of sidelink communication system, millimeter wave frequency band is considered to be used in the sidelink transmission system. In the sidelink millimeter wave transmission, how to select the optimal spatial domain transmission filter between the transmitting terminal and the receiving terminal is a problem that needs to be solved.

SUMMARY

The embodiments of the present disclosure provide a method for wireless communication and a terminal device, which can select an optimal spatial domain transmission filter between the transmitting terminal and the receiving terminal.
In the first aspect, a method for wireless communication is provided. The method includes the following operation.
A first terminal device transmits M Channel State Information Reference Signals (CSI-RSs) to a second terminal device by using spatial domain transmission filters. The M CSI-RSs are used for selecting a target spatial domain transmission filter.
The M CSI-RSs correspond to a plurality of CSI-RS resources in a target CSI-RS resource set, and M is a positive integer.
In the second aspect, a method for wireless communication is provided. The method includes the following operation.
A second terminal device receives M CSI-RSs transmitted by a first terminal device by using spatial domain transmission filters. The M CSI-RSs are used for selecting a target spatial domain transmission filter, the M CSI-RSs correspond to a plurality of CSI-RS resources in a target CSI-RS resource set, and M is a positive integer.
In the third aspect, a terminal device is provided. The terminal device is used for performing the method in the above first aspect.
Specifically, the terminal device includes a function module for performing the method in the above first aspect.
In the fourth aspect, a terminal device is provided. The terminal device is used for performing the method in the above second aspect.
Specifically, the terminal device includes a function module for performing the method in the above second aspect.
In the fifth aspect, a terminal device is provided. The terminal device includes a processor and a memory. The memory is configured to store computer programs, and the processor is configured to invoke and run the computer programs stored in the memory to perform the method in the above first aspect.
In the sixth aspect, a terminal device is provided. The terminal device includes a processor and a memory. The memory is configured to store computer programs, and the processor is configured to invoke and run the computer programs stored in the memory to perform the method in the above second aspect.
In the seventh aspect, an apparatus is provided. The apparatus is configured to implement a method in any of the above first aspect to second aspect.
Specifically, the apparatus includes a processor for invoking and running computer programs from a memory to cause a device on which the apparatus is mounted to perform the method in any of the above first to second aspects.
In an eighth aspect, a computer readable storage medium for storing computer programs is provided. The computer programs cause a computer to perform the method in any of the above first to second aspects.
In the ninth aspect, a computer program product including computer program instructions is provided. The computer program instructions cause a computer to perform a method in any of the above first to second aspects.
In a tenth aspect, a computer program is provided. When the computer program is run on a computer, the computer performs the method in any of the above first to second aspects.
The optimal spatial domain transmission filter between the first terminal device and the second terminal device can be selected by using the above technical solutions.

BRIEF DESCRIPTION OF THE DRAWINGS

FIG. 1 is a schematic diagram of a communication system architecture applied by the embodiments of the present disclosure.

FIG. 2 is a schematic diagram of another communication system architecture applied by the embodiments of the present disclosure.

FIG. 3 is a schematic diagram of a sidelink communication within a network coverage provided by the present disclosure.

FIG. 4 is a schematic diagram of a sidelink communication partially within a network coverage provided by the present disclosure.

FIG. 5 is a schematic diagram of a sidelink communication outside of the network coverage provided by the present disclosure.

FIG. 6 is a schematic diagram of a sidelink communication in which a central control node exists provided by the present disclosure.

FIG. 7 is a schematic diagram of a unicast sidelink communication provided by the present disclosure.

FIG. 8 is a schematic diagram of a multicast sidelink communication provided by the present disclosure.

FIG. 9 is a schematic diagram of a broadcast sidelink communication provided by the present disclosure.

FIG. 10 is a schematic diagram of a slot structure in a New Radio (NR)-Vehicle to everything (V2X) provided by the present disclosure.

FIG. 11 is a schematic diagram of not using an analog beam and using the analog beam provided by the present disclosure.

FIG. 12 is a schematic diagram of configuring a Transmission Configuration Indicator (TCI) state of a Physical Downlink Shared Channel (PDSCH) provided by the present disclosure.

FIG. 13 is a schematic flowchart of a method for wireless communication provided according to the embodiments of the present disclosure.

FIG. 14 is a schematic diagram of a spatial domain transmission filter provided according to the embodiments of the present disclosure.

FIG. 15 is a schematic diagram of transmitting CSI-RSs by using spatial domain transmission filters provided according to the embodiments of the present disclosure.

FIG. 16 to FIG. 21 are schematic diagrams of contents contained in the first information provided according to embodiments of the present disclosure respectively.

FIG. 22 is a schematic diagram of first information carried in a Media Access Control Control Element (MAC CE) provided according to the embodiments of the present disclosure.

FIG. 23 is a schematic diagram of another first information carried in a MAC CE provided according to the embodiments of the present disclosure.

FIG. 24 is a schematic flowchart of determining an optimal spatial domain transmission filter provided according to the embodiments of the present disclosure.

FIG. 25 is a schematic block diagram of a terminal device provided according to the embodiments of the present disclosure.

FIG. 26 is a schematic block diagram of another terminal device provided according to the embodiments of the present disclosure.

FIG. 27 is a schematic block diagram of a communication device provided according to the embodiments of the present disclosure.

FIG. 28 is a schematic block diagram of an apparatus provided according to the embodiments of the present disclosure.

FIG. 29 is a schematic block diagram of a communication system provided according to the embodiments of the present disclosure.

DETAILED DESCRIPTION

The technical solutions of the embodiments of the present disclosure will be described below in combination with the drawings in the embodiments of the present disclosure. It is obvious that the described embodiments are part of the embodiments of the present disclosure, but not all of them. With respect to the embodiments in the present disclosure, all other embodiments obtained by those of ordinary skill in the art without making creative efforts fall within the scope of protection of the present disclosure.

The technical solutions of the embodiments of the present disclosure may be applied to various communication systems, such as, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a non-Terrestrial Networks (NTN) system, an Universal Mobile Telecommunications System (UMTS), a Wireless Local Area Network (WLAN), a Wireless Fidelity (WiFi), a 5th-Generation (5G) system or other communication systems.

In general, traditional communication systems support a limited number of connections and are easy to implement. However, with the development of communication technology, mobile communication systems will not only support traditional communication, but also support, for example, a Device to Device (D2D) communication, a Machine to Machine (M2M) communication, a Machine Type Communication (MTC), a Vehicle to Vehicle (V2V) communication, or a Vehicle to everything (V2X) communication, etc. Embodiments of the present disclosure may also be applied to these communication systems.

Alternatively, the communication system in the embodiments of the present disclosure may be applied to a Carrier Aggregation (CA) scenario, a Dual Connectivity (DC) scenario, and a Standalone (SA) network distribution scenario.

Alternatively, the communication system in the embodiments of the present disclosure may be applied to an unlicensed spectrum, and the unlicensed spectrum may also be considered a shared spectrum. Alternatively, the communication system in the embodiments of the present disclosure may also be applied to a licensed spectrum, and the licensed spectrum may also be considered as a non-shared spectrum.

Embodiments of the present disclosure are described in combination with a network device and a terminal device. The terminal device may also be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent or a user device, etc.

The terminal device may be a STATION (ST) in a WLAN, a cellular telephone, a cordless telephone, a Session Initiation Protocol (SIP) telephone, a Wireless Local Loop (WLL) STATION, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN), etc.

In the embodiments of the present disclosure, the terminal device may be deployed on land, which includes an indoor or outdoor device, a hand-held device, a wearable device or a vehicle-mounted device. It may also be deployed on the water (such as ships, etc.). It may also be deployed in the air (such as airplanes, balloons and satellites, etc.).

In the embodiments of the present disclosure, the terminal device may be a Mobile Phone (Mobile Phone), a tablet computer (Pad), a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in a smart home, etc.

By way of example and not limitation, in embodiments of the present disclosure, the terminal device may also be a wearable device. The wearable device may also be called a wearable intelligent device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have characteristics of full functions, large size and realizing complete or partial functions without relying on smart phones, such as a smart watch or smart glasses, and a device that only focus on certain application functions and needs to be used in combination with other devices, such as smart phones, for example, various smart bracelets for monitoring physical signs and smart jewelries.

In the embodiments of the present disclosure, the network device may be a device for communicating with a mobile device, and the network device may be an Access Point (AP) in a WLAN, a Base Transceiver Station (BTS) in a GSM or CDMA, a NodeB (NB) in a WCDMA, an Evolved Node B (eNB or eNodeB) in a LTE, or a relay station or an AP, or a vehicle-mounted device, a wearable device, a network device or a base station (gNB) in an NR network, or a network device in a future evolved PLMN network or a network device in an NTN network, etc.

By way of example and not limitation, in the embodiments of the present disclosure, the network device may have mobility characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, and the like. Alternatively, the network device may also be a base station arranged on land, water area and the like.

In the embodiments of the present disclosure, the network device may provide services for the cell, and the terminal device communicates with the network device through the transmission resources (for example, frequency domain resources, or spectrum resources) used by the cell. The cell may be a cell corresponding to the network device (for example, base station). The cell may belong to a macro base station or a base station corresponding to a Small cell. The Small cell may include a Metro cell, a Micro cell, a Pico cell, a Femto cell, etc. These Small cells have the characteristics of small coverage and low transmission power, and are suitable for providing high-speed data transmission services.

It should be understood that the terms "system" and "network" are often used interchangeably in the present disclosure. In the present disclosure, the term "and/or" merely indicates an association relationship between associated objects, which indicates that there may be three relationships. For example, A and/or B means that there are three situations: A exists alone, A and B exist simultaneously, and B exists alone. In addition, the character "/" in the present disclosure generally indicates that there is "or" relationship between the associated objects.

Terms used in the embodiments of the present disclosure are used only for explanation of specific embodiments of the present disclosure and are not intended to be limiting. The terms "first", "second", "third", "fourth" and the like in the description, claims and drawings of the present disclosure are used to distinguish different objects and are not used to describe a particular order. Furthermore, the terms "comprising" and "having" and any variations thereof are intended to cover non-exclusive inclusion.

It should be understood that the reference to "indicating" in the embodiments of the present disclosure may be a direct indication, may be an indirect indication, or may indicate that there is an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

In the description of embodiments of the present disclosure, the term "corresponding" may indicate that there is a direct correspondence or an indirect correspondence relationship between the two objects, may also indicate that there is an association relationship between the two objects, may also indicate a relationship of indicating and being indicated, configuring and being configured, etc.

In the embodiments of the present disclosure, "predefined" or "pre-configured" may be implemented by pre-storing corresponding codes, tables, or other information that is used to indicate relevant information in the device (for example, including the terminal device and the network device), the specific implementation of which is not limited in the present disclosure. For example, "predefined" may refer to what is defined in the protocol.

In the embodiments of the present disclosure, the "protocol" may refer to a standard protocol in the communication field. For example, the protocol may include an LTE protocol, an NR protocol, and related protocols applied in future communication systems, which are not limited in the present disclosure.

In order to facilitate understanding of the technical solutions of the embodiments of the present disclosure, the technical solutions of the present disclosure will be described in detail below by way of specific embodiments. The following related technologies can be taken as alternative solutions to arbitrarily be combined with the technical solutions of the embodiments of the present disclosure, and all of them belong to the protection scope of the embodiments of the present disclosure. The embodiments of the present disclosure include at least some of the following.

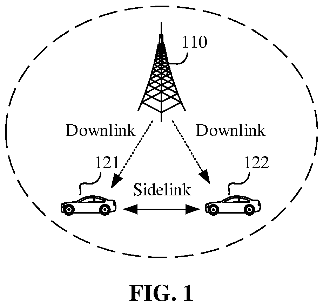

FIG. 1 is a schematic diagram of a communication system applied by the embodiments of the present disclosure. Transmission resources of the vehicle-mounted terminals (the vehicle-mounted terminal 121 and the vehicle-mounted terminal 122) are allocated by the base station 110, and the vehicle-mounted terminals transmit data on the sidelink according to the resources allocated by the base station 110. Specifically, the base station 110 may allocate a resource for one time of transmission to the terminal, or may allocate resources for a semi-static transmission to the terminal.

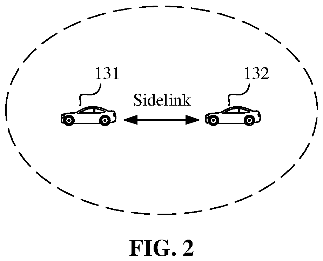

FIG. 2 is a schematic diagram of another communication system applied by the embodiments of the present disclosure. The vehicle-mounted terminals (the vehicle-mounted terminal 131 and the vehicle-mounted terminal 132) independently select transmission resources from the resources of the sidelink for data transmission. Alternatively, the vehicle-mounted terminals may randomly select the transmission resources or select the transmission resources by monitoring.

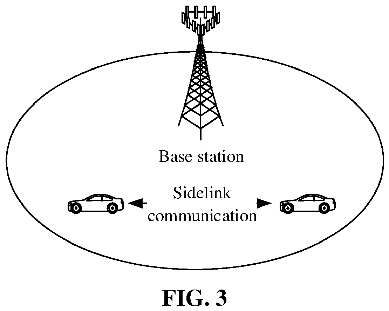

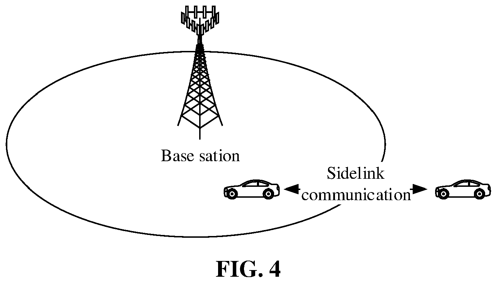

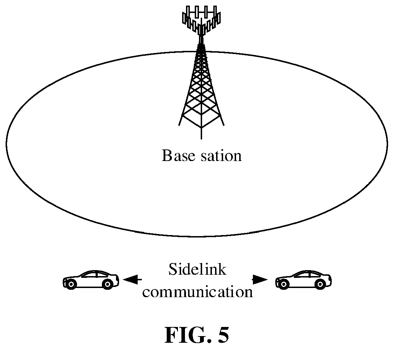

It should be noted that according to the network coverage situation of the terminals that perform communication, the sidelink communication may be divided into the sidelink communication within the network coverage (as illustrated in FIG. 3), the sidelink communication partially within the network coverage (as illustrated in FIG. 4), and the sidelink communication outside of the network coverage (as illustrated in FIG 5).

In the sidelink communication within the network coverage illustrated in FIG. 3, all the terminals that perform sidelink communication are within the coverage of the base station, so that all the terminals may perform sidelink communication based on the same sidelink configuration by receiving the configuration signaling of the base station.

In the sidelink communication partially within the network coverage illustrated in FIG. 4, part of terminals that perform sidelink communication are located in the coverage of the base station, and these part of terminals may receive the configuration signaling of the base station and perform sidelink communication according to the configuration of the base station. The terminal outside the network coverage cannot receive the configuration signaling of the base station. In this case, the terminal outside the network coverage determines the sidelink configuration according to the pre-configuration information and the information carried in the Physical Sidelink Broadcast Channel (PSBCH) transmitted by the terminal within the network coverage, and performs sidelink communication.

In the sidelink communication outside of the network coverage illustrated in FIG. 5, all the terminals that perform the sidelink communication are outside the network coverage, and all the terminals determine the sidelink configuration according to the pre-configuration information to perform the sidelink communication.

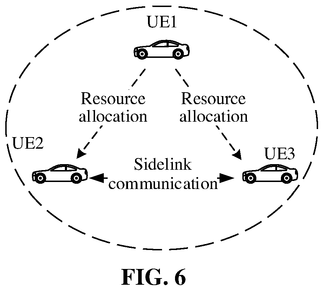

In the sidelink communication with a central control node illustrated in FIG. 6, multiple terminals form a communication group. The communication group has a central control node, which may also be called a Cluster Header (CH) terminal. The central control node has one of the following functions: being responsible for the establishment of the communication group, joining and leaving of group members, performing resource coordination, allocating sidelink transmission resources for other terminals, receiving sidelink feedback information of other terminals, performing resource coordination with other communication groups, and the like.

It should be noted that the Device-to-Device (D2D) communication is a Sidelink (SL) transmission technology based on terminal-to-terminal, which is different from the manner in which communication data is received or transmitted through the base station in the traditional cellular system. The V2X system adopts the direct communication manner of terminal-to-terminal, so it has higher spectrum efficiency and lower transmission delay. In 3GPP, two transmission modes are defined, which are referred to as the first mode (sidelink resource allocation mode 1) and the second mode (sidelink resource allocation mode 2).

In the first mode, the transmission resource of the terminal is allocated by the base station, and the terminal transmits data on the sidelink according to the resource allocated by the base station. The base station may allocate resource for one time of transmission to the terminal, or allocate resources for semi-static transmission to the terminal. As illustrated in FIG. 3, the terminal is within the network coverage, and the network allocates transmission resources for the sidelink transmission to the terminals.

In the second mode, the terminal selects a resource in the resource pool for data transmission. As illustrated in FIG. 5, the terminal is outside the coverage of the cell, and the terminal independently selects transmission resource in the pre-configured resource pool for the sidelink transmission. Alternatively, as illustrated in FIG. 3, the terminal independently selects the transmission resources in the resource pool configured by the network for the sidelink transmission.

In the New Radio-Vehicle to Everything (NR-V2X), automatic driving is supported, so higher requirements are put forward for data interaction between vehicles, such as higher throughput, less delay, higher reliability, greater coverage range and more flexible resource allocation.

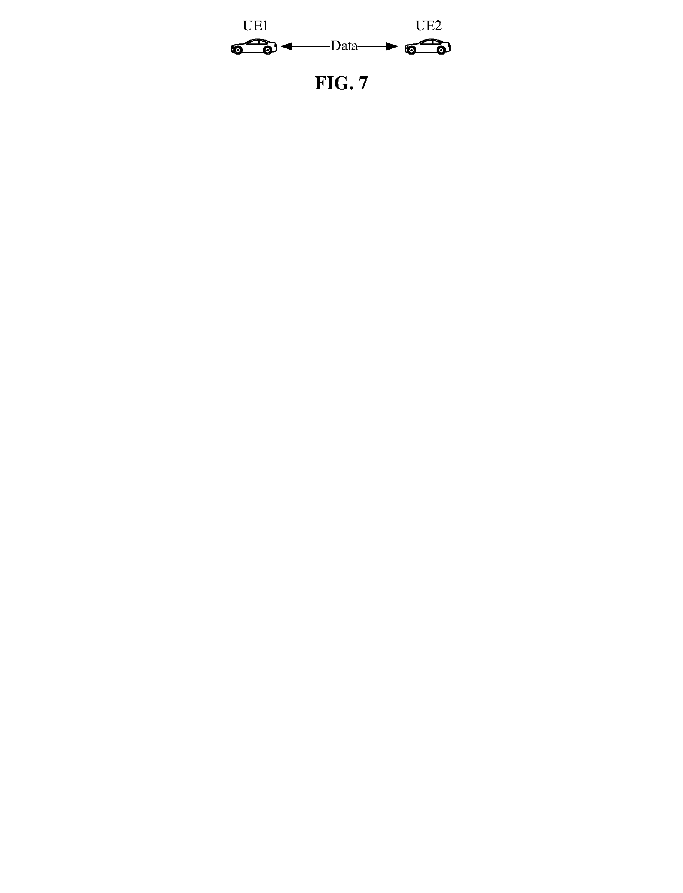

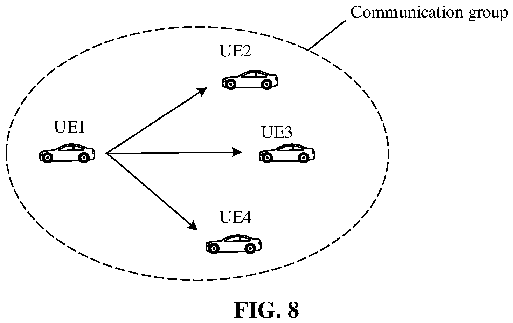

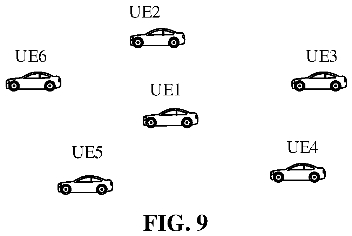

In LTE-V2X, broadcast transmission mode is supported, and in NR-V2X, unicast and multicast transmission modes are introduced. For the unicast transmission, there is only one terminal for the receiving end. As illustrated in FIG. 7, the unicast transmission is performed between UE1 and UE2. For multicast transmission, the receiving end is all terminals in a communication group or all terminals within a certain transmission distance. As illustrated in FIG. 8, UE1, UE2, UE3 and UE4 form a communication group, in which UE1 transmits data, and other terminal devices in the group are receiving terminals. In the broadcast transmission mode, the receiving end is any terminal around the transmitting terminal. As illustrated in FIG. 9, UE1 is the transmitting terminal, and other terminals (UE2-UE6) around the UE1 are all receiving terminals.

In order to facilitate a better understanding of the embodiments of the present disclosure, the frame structure of the NR-V2X system related to the present disclosure is described.

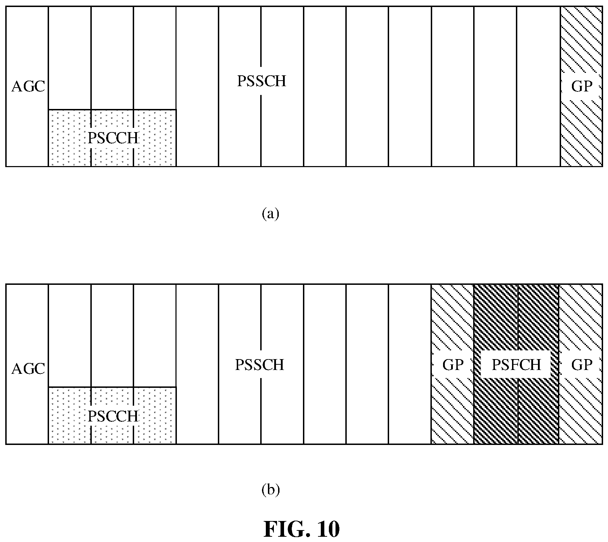

The slot structure in the NR-V2X system is illustrated in FIG. 10. The figure (a) of the FIG. 10 illustrates a slot structure in which a Physical Sidelink Feedback Channel (PSFCH) is not included in the slot. The figure (b) of the FIG. 10 illustrates a slot structure including a PSFCH.

The Physical Sidelink Control Channel (PSCCH) in the NR-V2X starts from the second sidelink symbol of the slot in the time domain, occupies 2 or 3 Orthogonal frequency-division multiplexing (OFDM) symbols, and may occupy {10, 1215, 20, 25} physical resource blocks (PRBs) in the frequency domain. In order to reduce the complexity of blind detection for the PSCCH by UE, only one PSCCH symbol and one PRB may be configured in a resource pool. In addition, because the sub-channel is the minimum granularity of resource allocation for the Physical Sidelink Shared Channel (PSSCH) in the NR-V2X, the number of PRBs occupied by the PSCCH must be less than or equal to the number of PRBs contained in a sub-channel in the resource pool, so as not to cause additional restrictions on resource selection or allocation for the PSSCH. The PSSCH also starts from the second sidelink symbol of the slot in time domain, the last time domain symbol in the slot is a Guard Period (GP) symbol, and the rest symbols map the PSSCH. The first sidelink symbol in the slot is a repetition of the second sidelink symbol, the first sidelink symbol is typically used by the receiving terminal as an Auto Gain Control (AGC) symbol, and the data on the first sidelink symbol is not typically used for data demodulation. The PSSCH occupies M sub-channels in the frequency domain, and each sub-channel includes N consecutive PRBs, as illustrated in figure (a) of FIG. 10.

When a PSFCH channel is included in a slot, the penultimate and antepenultimate symbols in the slot are used for PSFCH transmission, and a time domain symbol preceding the PSFCH is used as a GP symbol, as illustrated in (b) of FIG. 10.

In order to facilitate a better understanding of the embodiments of the present disclosure, a multi-beam system related to the present disclosure is described.

The design goal of the NR or 5G system includes large bandwidth communication in high frequency band (such as frequency band above 6GHz). When the operating frequency becomes higher, the path loss in the transmission process will increase, thus affecting the coverage ability of high frequency systems. In order to effectively guarantee the coverage of NR system with high frequency band, an effective technical solution is based on a massive antenna array (massive Multiple-input Multiple-Output (MIMO)) to form a shaped beam with greater gain, overcome propagation loss and ensure the coverage of the system.

Because the millimeter wave antenna array has shorter wavelength, smaller antenna array spacing and aperture, more physical antenna array can be integrated in a two-dimensional antenna array with a limited size. At the same time, due to the limited size of millimeter wave antenna array, considering the hardware complexity, cost and power consumption, digital beamforming cannot be adopted, but analog beamforming is usually adopted, which can enhance the network coverage and reduce the implementation complexity of device.

A cell (sector) uses a wider beam to cover the whole cell. Therefore, at every moment, the terminal device within the coverage of the cell has the opportunity to obtain the transmission resources allocated by the system.

The multi-beam system in the NR/5G covers the whole cell through different beams, that is, each beam covers a small range, and the effect of multiple beams covering the whole cell is realized through sweeping in time.

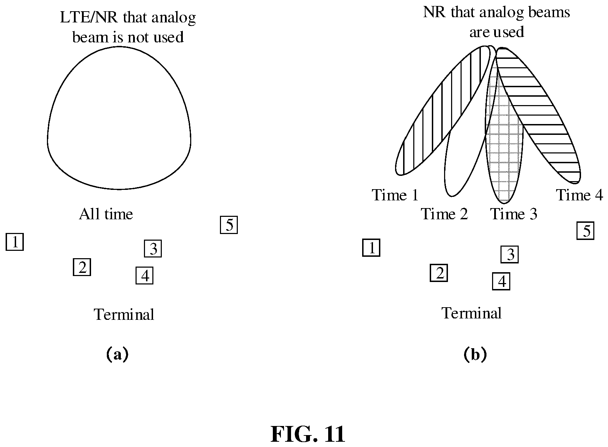

FIG. 11 illustrates a schematic diagram of a system that does not use beamforming and a schematic diagram of a system that uses beamforming. The figure (a) of FIG. 11 is a traditional LTE and NR system that does not use beamforming, and figure (b) of FIG. 11 is a NR system that uses beamforming.

In figure (a) of FIG. 11, the network side in the LTE/NR uses a wide beam to cover the whole cell, and users 1-5 may receive network signals at any time.

In contrast, in (b) of FIG. 11, the network side uses narrower beams (for example, beams 1-4 in the figure), and different beams are used to cover different areas in the cell at different times. For example, at time 1, the network side in the NR covers the area where the user 1 is located through beam 1. At time 2, the network side in the NR covers the area where the user 2 is located through the beam 2. At time 3, the network side in the NR covers the area where the user 3 and the user 4 are located through the beam 3. At time 4, the network side in the NR covers the area where the user 5 is located through the beam 4.

In figure (b) of FIG. 11, because the network uses narrower beams, the transmission energy can be more concentrated, so a longer distance can be covered. At the same time, because the beams are narrow, each beam can only cover part of the cell, so analog beamforming is "exchange time for space".

The analog beamforming may be used not only for the device on the network side, but also for the terminal. At the same time, the analog beamforming may be used not only for transmitting signals (called transmission beams), but also for receiving signals (called reception beams).

Different beams are identified by different signals carried on them.

Different Synchronization Signal blocks (SS blocks) are transmitted on some different beams, and the terminal device may distinguish different beams through different SS blocks.

Different Channel State Information Reference Signals (CSI-RSs) are transmitted on some different beams, and the terminal device identifies different beams by CSI-RS signals/CSI-RS resources.

In a multi-beam system, the Physical Downlink Control Channel (PDCCH) and Physical Downlink Shared Channel (PDSCH) may be transmitted through different downlink transmission beams.

For systems with carrier frequencies below 6GHz, there is generally no analog beam on the terminal side, so omni-directional antennas (or near omni-directional antennas) are used to receive signals transmitted by different downlink transmission beams of base stations.

For millimeter wave systems, there may be analog beams on the terminal side, so it is necessary to use the corresponding downlink reception beams to receive the signals transmitted by the corresponding downlink transmission beams. At this time, the corresponding beam indication information (beam indication) is needed to assist the terminal device in determining the related information of the transmission beams of the network side or the related information of the corresponding reception beams of the terminal side.

In NR protocol, the beam indication information is not used for directly indicating the beam itself, but is used for indicating by the Quasi-co-located (QCL) hypothesis (such as QCL hypothesis with QCL type of "QCL-TypeD") between signals. On the terminal side, the determination of the statistical characteristics of the received corresponding channels/signals is also based on the QCL hypothesis.

In order to facilitate a better understanding of the embodiments of the present disclosure, the QCL indication/hypothesis for downlink transmission related to the present disclosure is described.

In order to improve the receiving performance, when the terminal performs data reception, the terminal may improve the receiving algorithm by using the characteristics of the transmission environment corresponding to the data transmission. For example, the statistical characteristics of the channels may be used to optimize the design and parameters of the channel estimator. In the NR system, these characteristics of data transmission are represented by QCL state (QCL-Info).

If the downlink transmission comes from different Transmission Reception Points (TRPs)/antenna array block (panels)/beams, the characteristics of the transmission environment corresponding to the data transmission may also change. Therefore, in the NR system, when the network side transmits the downlink control channel or data channel, the corresponding QCL state information will be indicated to the terminal through the Transmission Configuration Indicator (TCI) state.

A TCI state can contain the following configuration: a TCI state identification (ID) for identifying a TCI state, QCL-Info 1 and QCL-Info 2 (alternative).

A piece of QCL information contains the following information: a QCL type configuration, which may be one of QCL type A, QCL type B, QCL type C, or QCL type D; and a QCL reference signal configuration, which includes a cell ID where the reference signal is located, a Band Width Part (BWP) ID, and an reference signal ID (which may be a CSI-RS resource ID or a Synchronization Signal Block (SSB) index).

If both QCL-Info 1 and QCL-Info 2 are configured, the QCL type of at least one pieces of QCL information must be one of type A, type B and type C, and the QCL type of the other QCL information must be QCL type D.

Different QCL type configurations are defined as follows:

'QCL-TypeA': {Doppler shift, Doppler spread, average delay, delay spread};
'QCL-TypeB' : {Doppler shift, Doppler spread};
'QCL-TypeC': {Doppler shift, average delay};
'QCL-TypeD': {Spatial Rx parameter}.

In the NR system, the network side may indicate the corresponding TCI state for the downlink signal or downlink channel.

If the network side configures the QCL reference signal of the target downlink channel or the target downlink signal as a reference SSB or a reference CSI-RS resource through the TCI state, and the QCL type configuration is type A, type B or type C, the terminal may assume that the large-scale parameter of the target downlink signal is the same as that of the reference SSB or the reference CSI-RS resource, and the large-scale parameter is determined through the QCL type configuration.

Similarly, if the network side configures the QCL reference signal of the target downlink channel or the target downlink signal as a reference SSB or a reference CSI-RS resource through the TCI state, and the QCL type configuration is type D, the terminal may receive the target downlink channel or the target downlink signal by using the same reception beam (i.e., Spatial Rx parameter) as receiving the reference SSB or the reference CSI-RS resource. Typically, the target downlink channel (or downlink signal) and its reference SSB or reference CSI-RS resources are transmitted on the network side by the same TRP or the same panel or the same beam. If the transmission TRPs or transmission panels or transmission beams of two downlink signals or downlink channels are different, different TCI states are usually configured.

For the downlink control channel, the TCI state of the corresponding Control Resource Set (CORESET) may be indicated by a manner of Radio Resource Control (RRC) signaling or a manner of RRC signaling and Media Access Control (MAC) signaling.

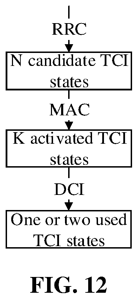

For the downlink data channel, the available TCI state set is indicated by RRC signaling, part of TCI states are activated by the MAC layer signaling, and finally one or two TCI states are indicated for a PDSCH scheduled by the DCI from the activated TCI states by a TCI state indication field in Downlink Control Information (DCI). The case of 2 TCI states is mainly for scenarios that multiple TRPs are similar. For example, as illustrated in FIG. 12, the network device indicates N candidate TCI states by the RRC signaling, activates K TCI states by the MAC signaling, and finally indicates one or two used TCI states from the activated TCI states by a TCI state indication field in DCI.

In order to facilitate a better understanding of the embodiments of the present disclosure, the technical problems existing in the present disclosure are explained.

In order to improve the transmission rate of sidelink communication system, millimeter wave frequency band is considered to be used in sidelink transmission system. In the sidelink millimeter wave transmission, how to select the optimal spatial domain transmission filter between the transmitting terminal and the receiving terminal is a problem that needs to be solved.

Based on the above problem, the present disclosure provides a solution for determining an optimal spatial domain transmission filter for sidelink communication, which can determine an optimal spatial domain transmission filter between the transmitting terminal and the receiving terminal.

The technical solutions of the present disclosure will be described in detail by specific embodiments below.

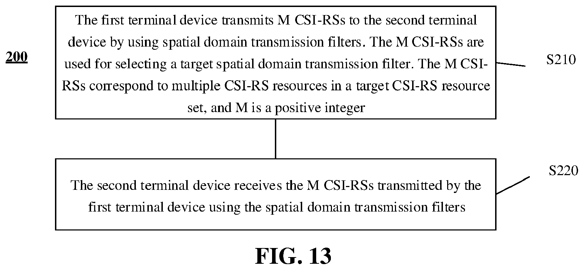

FIG. 13 is a schematic flowchart of a method 200 for wireless communication according to the embodiments of the present disclosure. As illustrated in FIG. 13, the method 200 for wireless communication may include at least some of the following operations.

In operation S210, the first terminal device transmits M CSI-RSs to the second terminal device by using spatial domain transmission filters. The M CSI-RSs are used for selecting a target spatial domain transmission filter. The M CSI-RSs correspond to multiple CSI-RS resources in a target CSI-RS resource set, and M is a positive integer.

In operation S220, the second terminal device receives the M CSI-RSs transmitted by the first terminal device using the spatial domain transmission filters.

In the embodiments of the present disclosure, the second terminal device measures the received CSI-RSs to obtain the measurement results, and the second terminal device may feedback the CSI-RS resources according to the measurement results, so that the first terminal device may select the target spatial domain transmission filter.

In order to improve the transmission rate of the sidelink communication system, millimeter wave frequency band is used in the sidelink transmission system. In the sidelink millimeter wave transmission, the transmitting end (i.e., the first terminal device) usually uses beamforming for sidelink transmission.

In the embodiments of the present disclosure, the first terminal device is a transmitting terminal device, and the second terminal device is a receiving terminal device.

In some embodiments, the CSI-RSs in the M CSI-RSs are sidelink CSI-RSs.

In some embodiments, the M CSI-RSs may also be replaced by other sidelink signals. That is, in the above operation S210, the first terminal device may transmit M sidelink signals to the second terminal device by using spatial domain transmission filters. The M sidelink signals are used to select a target spatial domain transmission filter.

In some embodiments, the sidelink signals in the M sidelink signals includes, but are not limited to, one of the following: CSI-RSs, Demodulation Reference Signals (DMRSs), PSCCH DMRSs, PSSCH DMRSs, positioning reference signals (PRSs), Phase Tracking Reference Signals (PT-RSs) or sidelink synchronization signals (including sidelink primary synchronization signals and/or sidelink auxiliary synchronization signals).

In some embodiments, "transmitting M CSI-RSs" in the above operation S210 may also be expressed as "transmitting M CSI-RS resources", which is not limited in the present disclosure.

In some embodiments, the spatial domain transmission filter may also be referred to as a transmission beam or a spatial relationship or a spatial setting.

In some embodiments, the spatial domain transmission filter and the spatial domain reception filter are collectively referred to as spatial domain filters, the spatial domain transmission filter may also be referred to as a transmission end spatial domain filter, and the spatial domain reception filter may also be referred to as a reception end spatial domain filter or reception beam.

In some embodiments, the receiving end uses the same spatial domain reception filter to receive M CSI-RSs transmitted by the transmitting end.

In some embodiments of the present disclosure, each of the M CSI-RSs corresponds to a CSI-RS resource in the target CSI-RS resource set. The M CSI-RSs corresponds to multiple CSI-RS resources in the target CSI-RS resource set, which may refer to that the CSI-RS resources corresponding to the M CSI-RSs are different from each other. That is, the M CSI-RSs correspond one-to-one with multiple CSI-RS resources. Alternatively, at least two of the M CSI-RSs correspond to different CSI-RS resources. That is, the first terminal device transmits at least two CSI-RS resources by using spatial domain transmission filters.

In some embodiments, the operation of transmitting M CSI-RSs by the first terminal device to the second terminal device by using spatial domain transmission filters may refer to that the first terminal device transmits the M CSI-RSs by using different spatial domain transmission filters. For example, the M CSI-RSs respectively correspond to different transmission beams. Alternatively, the first terminal device does not use the same spatial domain transmission filter to transmit the M CSI-RSs. For example, the M CSI-RSs are transmitted by using at least two different transmission beams.

As an example, the above operation S210 may specifically include: the first terminal device transmits M CSI-RSs to the second terminal device by using M spatial domain transmission filters. Each spatial domain transmission filter corresponds to one CSI-RS.

As an example, the above operation S210 may specifically include the following operation.

The first terminal device transmits M CSI-RSs to the second terminal device by using K spatial domain transmission filters. K is less than M and K is greater than 1. That is, at least two of the M CSI-RSs are transmitted through different spatial domain transmission filters.

In the embodiments of the present disclosure, the terminal device may use beams for transmitting the sidelink data. In this case, the transmitting terminal may determine a transmission beam suitable for the receiving terminal to improve the performance of the sidelink transmission. For example, when the first terminal device serves as the transmitting terminal, the sidelink reference signals may be transmitted through different transmission beams. Further, the receiving terminal may measure the sidelink reference signals transmitted by the transmitting terminal, select the transmission beam corresponding to the optimal measurement result, and further feedback the optimal transmission beam to the transmitting terminal, so that the transmitting terminal performs subsequent sidelink transmission according to the optimal transmission beam fed back by the receiving terminal, thereby improving the transmission performance. In some embodiments, there are correspondences between the transmission beams and the reference signal resources. The receiving terminal selects the transmission beam corresponding to the optimal measurement result, and feeds back the reference signal resource information corresponding to the transmission beam to the transmitting terminal. The transmitting terminal may determine the optimal transmission beam according to the reference signal resource information and the correspondences.

In some embodiments, a corresponding repetition field in the configuration information of the target CSI-RS resource set takes the first value. The first value is used to indicate that the first terminal device does not use the same spatial domain transmission filter to transmit the CSI-RS resources in the target CSI-RS resource set. In other words, the first value is used to indicate that the first terminal device uses different spatial domain transmission filters to transmit the CSI-RS resources in the target CSI-RS resource set.

In some embodiments, the first value may be off (off), which indicates that the first terminal device transmits the M CSI-RSs for selecting a target spatial domain transmission filter.

In some embodiments, the first terminal device transmits M CSI-RSs resources by using M different spatial domain transmission filters. That is, different CSI-RS resources correspond to different spatial domain filters.

In some embodiments, the first terminal device transmits M CSI-RSs resources by using M1 different spatial domain transmission filters, and M1 < M. That is, different CSI-RS resources may be transmitted by using the same spatial domain transmission filter.

In some embodiments, the M CSI-RS resources correspond to M CSI-RS resources in a CSI-RS resource set. Further, the M CSI-RSs are different CSI-RS resources.

In some embodiments, the M CSI-RS resources correspond to M2 CSI-RS resources in a CSI-RS resource set, and M2 < M. Further, the M CSI-RS resources may include the same CSI-RS resources.

In some embodiments, the first terminal device receives the first information transmitted by the second terminal device.

The first information includes a target Channel State Information (CSI) report Quantity. The target CSI report Quantity includes at least one of the following: CSI-RS Resource Indicator (CRI), CRI-Reference Signal Received Power (RSRP) ('CRI-RSRP'), or CRI-Signal to Interference plus Noise Ratio (SINR) ('CRI-SINR').

In some embodiments, the CRI may be an index of the CSI-RS resource. That is, in the case that the target CSI report Quantity includes the CRI, the second terminal device may feed back only the index of the CSI-RS resource. In the case that the target CSI report Quantity includes the CRI-RSRP, the second terminal device can feed back the index of the CSI-RS resource and the RSRP. In the case that the target CSI report Quantity includes the CRI-SINR, the second terminal device may feed back the index of the CSI-RS resource and the SINR.

In some embodiments, the target CSI report Quantity may be determined by the second terminal device according to measurement results obtained by measuring the received CSI-RSs.

In some embodiments, the measurement results (including the RSRP and/or the SINR) in the present disclosure are obtained by measuring the CSI-RSs. In other embodiments, the measurement results are obtained by measuring the PSCCH DRMSs, the PSSCH DMRSs, or sidelink PT-RSs. In some embodiments, the CSI-RSs transmitted by the transmitting end are carried in the PSSCHs. That is, the CSI-RSs are mapped in the resources of the PSSCHs, the PSSCHs are scheduled through the SCI, and the CSI-RS transmission is indicated through the SCI. At this time, in each time of CSI-RS transmission, there are PSCCH and PSSCH associated with the CSI-RS transmission. Therefore, the receiving end may perform measurement based on the PSCCH DMRSs or the PSSCH DMRSs. That is, the CSI-RS resources may be determined based on measurement results of the PSCCH DMRSs or the PSSCH DMRSs associated with the CSI-RSs.

In some embodiments, the transmitting end indicates transmission of the CSI-RSs by an indication message. The receiving end determines the CSI-RS resource based on the measurement results by measuring the PSCCH DMRSs or PSSCH DMRSs associated with the CSI-RSs, and transmits the index of the CSI-RS resource, or the index of the CSI-RS resource and measurement result associated the CSI-RS resource (i.e., PSCCH-RSRP or PSSCH-RSRP) to the transmitting end to assist the transmitting end in selecting the spatial domain transmission filter. The measurement results for the PSCCH DMRSs or PSSCH DMRSs are the PSCCH-RSRPs or the PSSCH-RSRPs.

It should be understood that in the following embodiments, taking the measurement results as the measurement results obtained based on CSI-RSs as an example, the embodiments in the present disclosure are equally applicable to the case where the measurement results are the measurement results obtained based on the PSCCH DMRSs or the PSSCH DMRSs.

In some embodiments, the first information includes the indexes of N CSI-RS resources, or the first information is used for determining the indexes of N CSI-RS resources. The N CSI-RS resources are determined by the second terminal device according to the measurement results obtained by measuring the received CSI-RSs. N is the number of CSI-RS resources that the second terminal device needs to feed back or report, N is a positive integer, and $N \leq M$.

In the embodiments of the present disclosure, since the first terminal device uses different spatial domain transmission filters to transmit CSI-RSs in turn, the second terminal device cannot accurately know the resource positions of the CSI-RSs transmitted by the first terminal device. The second terminal device can only blindly detect whether the first terminal device transmits the CSI-RSs. In addition, since the first terminal device uses different spatial domain transmission filters to transmit the CSI-RSs and some spatial domain transmission filters are not aligned with the second terminal device, it is possible that the second terminal device cannot detect all the CSI-RSs transmitted by the first terminal device, and can only detect a part of the CSI-RSs transmitted by the first terminal device. Therefore, the second terminal device may transmit indication information to the first terminal device to indicate the number of CSI-RS resources (or CSI-RS resource indexes) fed back by the second terminal device.

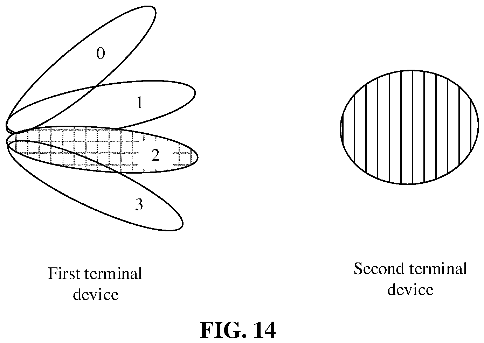

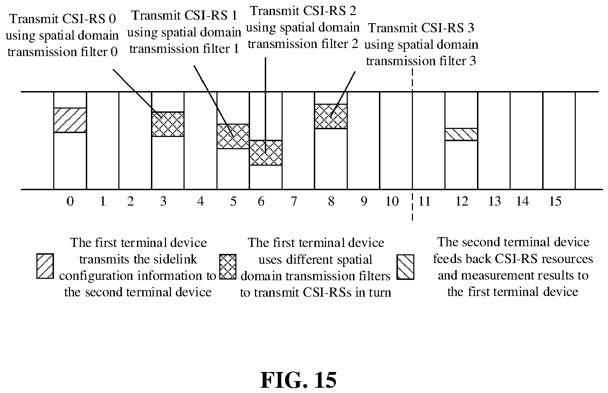

For example, as illustrated in FIG. 14 and FIG. 15 below, the first terminal device uses four spatial domain transmission filters (spatial domain transmission filter 0 to spatial domain transmission filter 3) to transmit the CSI-RSs respectively. The first terminal device transmits an indication message to the second terminal device at the slot 0 to indicate that the first terminal device will use different spatial domain transmission filters to transmit the CSI-RSs in turn and indicate that the delay boundary is 10 slots. That is, the second terminal device feeds back the indexes of CSI-RS resources and corresponding measurement results to the first terminal device after the slot 10, and it is indicated that the first terminal device transmits CSI-RS resources in turn before the slot 10. Since the first terminal device selects resources through the mode 2 (i.e., the second mode), it is impossible to ensure that the first terminal device has periodic transmission resources to transmit the CSI-RSs. As illustrated in FIG. 15, the first terminal device selects four slots (slot 3, 5, 6 and 8) to transmit CSI-RSs respectively by using different spatial domain transmission filters, and different spatial domain transmission filters are used for different slots. The second terminal device detects the SCIs transmitted by the first terminal device in the resource pool and determines whether the first terminal device transmits the CSI-RSs. The second terminal device can only receive CSI-RSs transmitted by the spatial domain transmission filter 1 and the spatial domain transmission filter 2 due to the influence of the channel quality, half-duplex limitation and whether the directions of the spatial domain transmission filters are aligned. Therefore, the second terminal device feeds back at most indexes of two CSI-RS resources and the measurement results corresponding to the two CSI-RS resources. Alternatively, the second terminal device may select one or two CSI-RS resources to feed back to the first terminal device.

In some embodiments, the indexes of the N CSI-RS resources are arranged in an order from high to low of the measurement results corresponding to the N CSI-RS resources, or the indexes of the N CSI-RS resources are arranged in an order from low to high of the measurement results corresponding to the N CSI-RS resources.

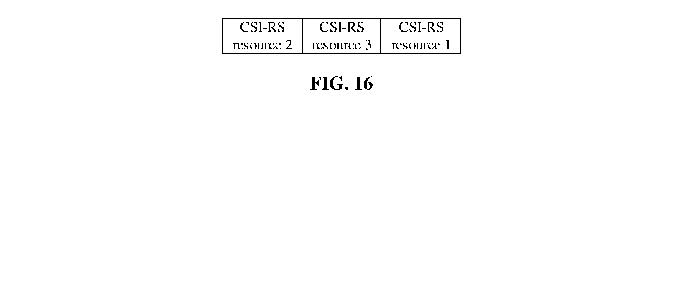

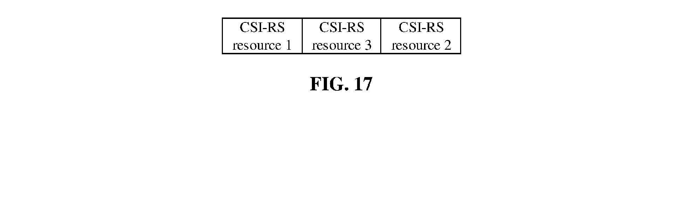

For a specific example, N=1, that is, the second terminal device only needs to feed back an index of a CSI-RS resource, for example, a CSI-RS with an optimal measurement result. The first terminal device may determine the spatial domain transmission filter corresponding to the CSI-RS according to the index of the CSI-RS resource. Alternatively, when N=1, the second terminal device does not need to feed back the measurement result. Alternatively, when N is greater than 1, the second terminal device may also feed back only the CSI-RS resource information, in which case the fed-back CSI-RS resource information is arranged in the order from high to low of the measurement results. For example, N=3, that is, information of the three CSI-RS resources, i.e., CSI-RS resource 1, CSI-RS resource 2 and CSI-RS resource 3, needs to be fed back, and the RSRP measurement results corresponding to the three CSI-RS resources are -30dBm,-10dBm and -20dBm respectively. The fed-back information of the CSI-RS resources is illustrated in FIG. 16. That is, at first is the CSI-RS resource with the optimal measurement result, followed by the CSI-RS resource with the suboptimal measurement result, and so on. It is also possible that the CSI-RS resource with the optimal measurement result is at the end, before which is the CSI-RS resource with the suboptimal measurement result, and so on, as illustrated in FIG. 17.

In some embodiments, the first information further includes first measurement information, and the first measurement information is used for indicating the measurement results corresponding to the N CSI-RS resources.

That is, the second terminal device feeds back indexes of N CSI-RS resources and measurement results corresponding to the N CSI-RS resources.

In some embodiments, when the first terminal device needs to switch the spatial domain transmission filter, fast selection and switching may be performed from the N spatial domain transmission filters corresponding to the N CSI-RS resources fed back by the second terminal device, without the first terminal device performing the process of selecting the optimal spatial domain transmission filter again.

For a specific example, when the sidelink operates in millimeter band, the link between the transmitting end and the receiving end is easily blocked by other objects, which leads to the failure of the current transmission link. At this time, the transmitting end needs to re-determine the optimal spatial domain transmission filter. If the receiving end only feeds back one CSI-RS resource, when the link fails, the transmitting end needs to re-select the optimal spatial domain transmission filter, so as to re-determine the new optimal spatial domain transmission filter. If the receiving end feeds back N CSI-RS resources, when the spatial domain transmission filter selected by the transmitting end fails, one of the spatial domain transmission filters corresponding to the remaining N-1 CSI-RS resources fed back by the receiving end may be selected for the sidelink transmission. For example, the CSI-RS resource corresponding to the suboptimal measurement result is selected, and then the spatial domain transmission filter corresponding to the CSI-RS resource is determined, thereby avoiding the process of re-selecting the optimal spatial domain transmission filter, and improving the speed of re-selecting or beam failure recovery of the spatial domain transmission filter.

For a specific example, when the transmitting end needs to transmit sidelink data to multiple receiving ends at the same time (for example, the transmitting end needs to transmit the sidelink feedback information to multiple receiving ends at the same slot), if each receiving end feeds back multiple optimal CSI-RS resources, the transmitting end may have a higher probability of selecting a spatial domain transmission filter to transmit sidelink data to multiple receiving ends at the same time compared with the case where only one optimal CSI-RS resource is fed back. For example, the transmitting end supports four spatial domain transmission filters, corresponding to the spatial domain transmission filters 0-3 respectively. If the receiving end 1 feeds back only one optimal spatial domain transmission filter, such as the spatial domain transmission filter 0, and the receiving end 2 feeds back one optimal spatial domain transmission filter, such as the spatial domain transmission filter 2, the transmitting end cannot transmit sidelink data (the sidelink data is, for example, sidelink feedback information) to two receiving ends simultaneously. However, if the receiving end 1 feeds back two optimal spatial domain transmission filters, such as spatial domain transmission filters 0 and 1, and the receiving end 2 feeds back two optimal spatial domain transmission filters, such as spatial domain transmission filters 1 and 2, the transmitting end may transmit sidelink data to two receiving ends by using the spatial domain transmission filter 1 simultaneously.

In some embodiments, the measurement results corresponding to the N CSI-RS resources are greater than or equal to the first threshold value.

In some embodiments, the first threshold value is pre-configured or agreed based on a protocol, or the first threshold value is configured by the network device, or the first threshold value is configured by the first terminal device.

In some embodiments, the N CSI-RS resources correspond to the first N CSI-RSs of the CSI-RSs received by the second terminal device in the order from high to low of measurement results.

In some embodiments, the N CSI-RS resources include N1 first-type CSI-RS resources and N2 second-type CSI-RS resources.

The N1 first-type CSI-RS resources correspond to the CSI-RSs received by the second terminal device, or the N1 first-type CSI-RS resources correspond to the CSI-RSs received by the second terminal device with measurement results greater than or equal to the first threshold value. The indexes corresponding to the N2 second-type CSI-RS resources are determined by at least one CSI-RS resource in the N1 first-type CSI-RS resources, or the indexes corresponding to the N2 second-type CSI-RS resources are determined by at least one CSI-RS resource in multiple CSI-RS resources except the N1 second-type CSI-RS resources, the measurement results corresponding to the N2 second-type CSI-RS resources are default values, N1 and N2 are positive integers, and N1+N2= N.

Specifically, when the first terminal device receives the feedback information (i.e., the first information) from the second terminal device, the index of the CSI-RS resource corresponding to the default value may be determined to be an invalid index according to the default value.

In some embodiments, the default values are pre-configured or agreed based on a protocol, or the default values are configured by the network device, or the default values are configured by the first terminal device to the second terminal device, or the default values are configured by the second terminal device to the first terminal device, or the default values are configured by the third terminal device. The third terminal device is a CH terminal of the communication group where the first terminal device and the second terminal device are located.

In some embodiments, the CH terminal is a terminal having at least one of the following functions in a communication group: resource management, resource allocation, resource coordination, resource allocation, or management of joining and leaving of group members.

For a specific example, the default value indicates a default measurement result when there is no measurement result, and when the measurement result fed back by the receiving end to the transmitting end is the default value, it means that the receiving end has no measurement result for the CSI-RS resource corresponding to the default value.

For example, in the case where the default value is pre-configured or configured by the network device, for example, the default value is included in the resource pool configuration information or the sidelink BWP configuration information.

For example, in the case where the default value is configured by the transmitting end to the receiving end (or configured by the receiving end to the transmitting end), for example, during the establishment of a unicast link, the transmitting end transmits PC5-RRC signaling to the receiving end (or the receiving end transmits PC5-RRC signaling to the transmitting end), and the PC5-RRC signaling carries the default value information.

In some embodiments, the default values are less than or equal to the second threshold value, or the default values correspond to negative infinity or infinity.

In some embodiments, the second threshold value is pre-configured or agreed based on a protocol, or the second threshold value is configured by the network device, or the second threshold value is configured by the first terminal device.

In some embodiments, the default values may be less than or equal to a value corresponding to the lowest measurement result.

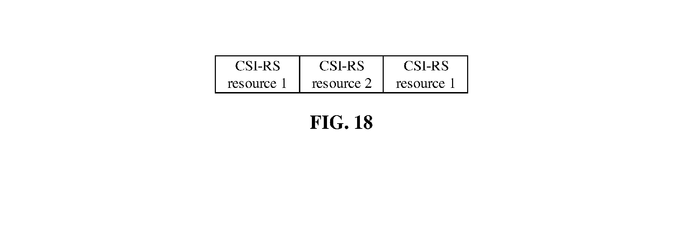

In some embodiments, in the case where the indexes corresponding to the N2 second-type CSI-RS resources are determined by at least one of the N1 first-type CSI-RS resources, for a specific example, the resource index corresponding to the CSI-RS resource with the optimal or worst measurement result among the N1 first-type CSI-RS resources is selected as the index of the N2 second-type CSI-RS resource. For example, in FIG. 14 and FIG. 15, N=3, the CSI-RS resource set includes four CSI-RS resources, but the second terminal device receives only two CSI-RSs (such as CSI-RS resource 1 and CSI-RS resource 2) and has measurement results corresponding to the two CSI-RSs, and the measurement results are RSRP1=-10dBm and RSRP2=-20dBm, respectively. In addition to feeding back the resource indexes corresponding to CSI-RS resource 1 and CSI-RS resource 2, the second terminal device also needs to feed back an index of a CSI-RS resource. The second terminal device selects the CSI-RS with the optimal RSRP measurement result, i.e., the CSI-RS resource 1, and feeds back its index of the CSI-RS resource. The second terminal device arranges CSI-RS resources according to the order of RSRP measurement results from high to low, so the order of the fed back indexes of the CSI-RS resources is illustrated in FIG. 18. The three indexes of the CSI-RS resources fed back by the second terminal device include two index values 1 of the CSI-RS resource and one index value 2 of the CSI-RS resource. When the first terminal device receives the feedback information from the second terminal device, it may be determined that one of indexes 1 of the CSI-RS (such as the second index 1 of the CSI-RS resource) is an invalid index according to the repeated indexes 1 of the CSI-RS resource.

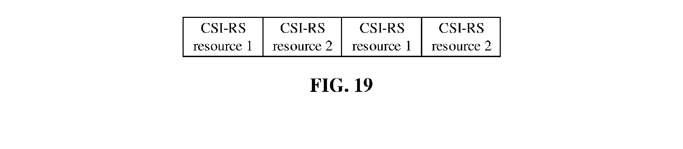

In some embodiments, in the case that the indexes corresponding to the N2 second-type CSI-RS resources are determined by at least one of the N1 first-type CSI-RS resources, for another specific example, the resource index corresponding to the CSI-RS resource with the optimal or worst measurement result among the N1 first-type CSI-RS resources is selected as the index of the N2 second-type CSI-RS resource. For example, in FIG. 14 and FIG. 15, N=4, the CSI-RS resource set includes four CSI-RS resources, but the second terminal device only receives two CSI-RSs (such as CSI-RS resource 1 and CSI-RS resource 2) and has measurement results corresponding to the two CSI-RSs, and the measurement results are RSRP1=-10dBm and RSRP2=-20dBm, respectively. In addition to feeding back the resource indexes corresponding to CSI-RS resource 1 and CSI-RS resource 2, the second terminal device also needs to feed back two indexes of CSI-RS resources. Because both CSI-RS resource 1 and CSI-RS resource 2 have measurement results, the second terminal device may repeatedly feed back CSI-RS resource 1 and CSI-RS resource 2, so the order of fed-back indexes of the CSI-RS resources is illustrated in FIG. 19. The four indexes of the CSI-RS resources fed back by the second terminal device include two index values 1 of the CSI-RS resource and two index values 2 of the CSI-RS resource. When the first terminal device receives the feedback information from the second terminal device, it may be determined that one of indexes of the CSI-RS (such as the second index 1 of the CSI-RS resource and the second index 2 of the CSI-RS resource) is an invalid index according to the repeated indexes of the CSI-RS resource.

In some embodiments, when the number of CSI-RS resources satisfying the condition detected by the second terminal device is N1 (N1 < N), the second terminal device feeds back the information of N CSI-RS resources and N measurement results. The N measurement results include the information of N1 CSI-RS resources satisfying the condition and measurement results corresponding to the N1 CSI-RS resources and the information of other N-N1 CSI-RS resources. The measurement results corresponding to the N-N1 CSI-RS resources are default values.

Specifically, the CSI-RS resources satisfying the condition include the following two situations.

In the first situation, the CSI-RS resources satisfying the condition include the CSI-RS resources detected by the second terminal device. That is, the second terminal device detects the SCI transmitted by the first terminal device, and if the SCI is detected, the information of the CSI-RS resources transmitted by the first terminal device may be determined through the SCI, so that the second terminal device may perform measurement on the CSI-RSs and obtain the corresponding measurement results.

In the second situation, the CSI-RS resources satisfying the condition include the CSI-RS resources detected by the second terminal device. The measurement results of the CSI-RS resources exceed the first threshold value. That is, when the second terminal device detects the CSI-RS resources and the measurement results exceed the first threshold value, the second terminal device feeds back the information of CSI-RS resources. For example, the second terminal device detects three CSI-RS resources (such as CSI-RS resource 1, CSI-RS resource 2 and CSI-RS resource 3) transmitted by the first terminal device, and the corresponding measurement results are RSRP1=-10dBm, RSRP2=-20dBm, RSRP3=-120dBm, respectively, and the RSRP threshold (i.e., the first threshold value) is -80dBm. Since the measurement result corresponding to the CSI-RS resource 3 is less than the RSRP threshold, the information of CSI-RS resources fed back by the second terminal device includes CSI-RS resource 1 and CSI-RS resource 2, and the CSI-RS resource 3 is not fed back.

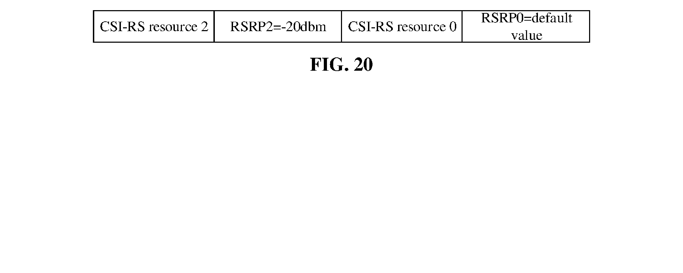

For a specific example, the second terminal device may select any one of the CSI-RS resources (except the CSI-RS resources satisfying the condition) to associate with the default values. For example, in FIG. 14 and FIG. 15, N=2, the CSI-RS resource set includes four CSI-RS resources, but the second terminal device receives only one CSI-RS (such as CSI-RS resource 2) and the measurement result is RSRP2=-20dBm (satisfying the condition in above first situation), then the second terminal device needs to feedback an index of a CSI-RS resource and the corresponding measurement result in addition to the index 2 corresponding to the CSI-RS resource and the corresponding measurement resul. The second terminal device selects any one of CSI-RS resource 0, CSI-RS resource 1 and CSI-RS resource 3 and feeds back the index value of the selected CSI-RS resource, and the measurement result corresponding to the selected CSI-RS resource is set to the default value. If the second terminal device selects CSI-RS resource 0, the measurement result of the CSI-RS resource 0 is set to a default value and the measurement result of the CSI-RS resource 0 is fed back to the first terminal device, as illustrated in FIG. 20.

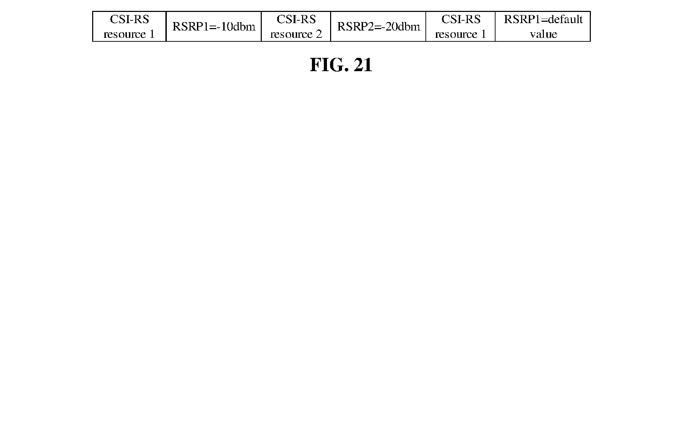

For another specific example, in addition to feeding back the information of N1 CSI-RS resources satisfying the condition and the measurement results corresponding to the N1 CSI-RS resources, when the second terminal device feeds back the information of other N-N1 CSI-RS resources, the second terminal device selects one CSI-RS resource from the N1 CSI-RS resources satisfying the condition and sets the measurement result of the selected CSI-RS resource to a default value. For example, a CSI-RS with the optimal or worst measurement result among N1 CSI-RS resources is selected, or a CSI-RS is arbitrarily selected or randomly selected. For example, in FIG. 14 and FIG. 15, N=3, the CSI-RS resource set includes four CSI-RS resources, but the second terminal device receives only two CSI-RSs (such as CSI-RS resource 1 and CSI-RS resource 2) and has measurement results corresponding to the two CSI-RSs. The measurement results are RSRP1=-10dBm and RSRP2=-20dBm, respectively, and the RSRP threshold is -80dBm. Therefore, the measurement results of two CSI-RS resources are both greater than the threshold (satisfying the condition in the above second situation). In addition to feeding back the resource indexes corresponding to CSI-RS resource 1 and CSI-RS resource 2 and measurement results corresponding to the CSI-RS resource 1 and CSI-RS resource 2, the second terminal device also needs to feed back an index of CSI-RS resource and the corresponding measurement result. The second terminal device selects a CSI-RS resource with optimal measurement result, i.e., the CSI-RS resource 1, and sets its measurement value to the default value. Therefore, the three indexes of the CSI-RS resources fed back by the second terminal device include two index values 1 of the CSI-RS resource and one index value 2 of the CSI-RS resource. The measurement results corresponding to the two index values 1 of the CSI-RS resource are -10dBm and default value, respectively, as illustrated in FIG. 21.

In some embodiments, the first measurement information includes quantization index information of measurement results corresponding to the N CSI-RS resources respectively.

In some embodiments, the number of bits occupied by indexes of the N CSI-RS resources and quantization index information of measurement results corresponding to the N CSI-RS resources is: $(A + B) \times N$.

In the above formula, A represents the number of bits occupied by the index of one CSI-RS resource in the indexes of the N CSI-RS resources, B represents the number of bits occupied by the quantization index information of the measurement result corresponding to one CSI-RS resource in the N CSI-RS resources, and $A = \lceil \log_2 M \rceil$.

For example, if M=8, then A=3. RSRP (or SINR) measurement results are quantized, and the quantized RSRP (or SINR) value is represented by B bits, such as B=7. The quantized RSRP has a range of [B1, B2] dBm (e.g. [-140,-44] dBm) and a step size of 1dBm.

In some embodiments, the first measurement information includes quantization index information of the first measurement result and N-1 pieces of differential quantization index information. The first measurement result corresponds to the highest value among the measurement results corresponding to the N CSI-RS resources.

In some embodiments, the number of bits occupied by indexes of the N CSI-RS resources and quantization index information of measurement results corresponding to the N CSI-RS resources are: $A \times N + B + C \times (N - 1)$.

In the above formula, A represents the number of bits occupied by the index of one CSI-RS resource in the indexes of the N CSI-RS resources, and B represents the number of bits occupied by the quantization index information of the first CSI-RS resource in the N CSI-RS resources. The measurement result corresponding to the first CSI-RS resource is the CSI-RS resource with the maximum corresponding measurement result in the N CSI-RS resources. C represents the number of bits occupied by the quantization index information of the difference between the measurement result corresponding to other CSI-RS resource in the N CSI-RS resources and the measurement result corresponding to the first CSI-RS resource, or, C represents the number of bits occupied by the quantization index information of the difference between the measurement results corresponding to two CSI-RS resources, of which the corresponding measurement results are adjacent, in the measurement results of the N CSI-RS resources, and $A = \lceil \log_2 M \rceil$.

For a specific example, RSRP (or SINR) measurement results are quantized, the measurement result with the maximum RSRP (or SINR) is represented by B bits, the remaining measurement result is represented by differential RSRP (or differential SINR), for example, B=7. The differential RSRP is by C bits, for example, C=4. The measurement result of RSRP represented by B bits has a range of [B1, B2] dBm (for example, [-140,-44] dBm), and a step size of 1dBm. The range represented by differential RSRP is [C1, C2] dB (for example, [-30, 0] dB), and a step size is 2dB. The differential RSRP is obtained relative to the maximum RSRP measurement result. That is, the differential RSRP represents difference between the measurement result and the maximum RSRP measurement result. Alternatively, the differential RSRP is obtained relative to an adjacent and greater RSRP measurement result.

For example, if the measured three RSRP results are-60dBm,-70dBm and-90dBm respectively, when the first differential RSRP manner is used, the maximum RSRP corresponds to -60dBm, and the remaining two differential RSRPs are-10dB and-30dB respectively. When the second differential RSRP manner is used, the maximum RSRP corresponds to -60dBm, and the remaining two differential RSRPs are -10 dB and-20 dB respectively.

In some embodiments, the second terminal device performs RSRP measurement based on the CSI-RSs and feeds back the measurement results of the RSRPs. In general, in order to feed back the measurement results quickly, the second terminal device generally uses Sidelink Control Information (SCI) or Media Access Control Control Element (MACE) to carry the fed-back the information of the CSI-RS resources and the corresponding measurement results. Therefore, it is necessary to quantize the RSRP measurement results. Moreover, the second terminal device feeds back the RSRP measurement result of layer 1 (i.e., L1 RSRP), that is, the RSRP result measured by physical layer is directly quantized and fed back to the first terminal device without filtering processing of layer 3.

For example, the measured RSRP is quantized with 7 bits, as illustrated in Table 1 below.

Table 1

| Reported value | L1 RSRP | Unit |
|---|---|---|
| RSRP_0 | Not valid | dBm |
| RSRP_1 | Not valid | dBm |
| RSRP_2 | Not valid | dBm |
| RSRP_3 | Not valid | dBm |
| RSRP_4 | Not valid | dBm |
| RSRP_5 | Not valid | dBm |
| RSRP_6 | Not valid | dBm |
| RSRP_7 | Not valid | dBm |
| RSRP_8 | Not valid | dBm |
| RSRP_9 | Not valid | dBm |
| RSRP_10 | Not valid | dBm |
| RSRP_11 | Not valid | dBm |
| RSRP_12 | Not valid | dBm |
| RSRP_13 | Not valid | dBm |

(continued)

| Reported value | L1 RSRP | Unit |
|---|---|---|
| RSRP_14 | Not valid | dBm |
| RSRP_15 | Not valid | dBm |
| RSRP_16 | RSRP<-140 | dBm |
| RSRP_17 | -140≤RSRP<-139 | dBm |
| RSRP_18 | -139≤RSRP<-13 8 | dBm |
| ... | | ... |
| RSRP_111 | -46≤RSRP<-45 | dBm |
| RSRP_112 | -45≤RSRP<-44 | dBm |
| RSRP_113 | -44≤RSRP | dBm |
| RSRP_114 | Not valid | dBm |
| RSRP_115 | Not valid | dBm |
| RSRP_116 | Not valid | dBm |
| RSRP_117 | Not valid | dBm |
| RSRP_118 | Not valid | dBm |
| RSRP_119 | Not valid | dBm |
| RSRP_120 | Not valid | dBm |
| RSRP_121 | Not valid | dBm |
| RSRP_122 | Not valid | dBm |
| RSRP_123 | Not valid | dBm |
| RSRP_124 | Not valid | dBm |
| RSRP_125 | Not valid | dBm |
| RSRP_126 | Not valid | dBm |
| RSRP_127 | Infinity | dBm |

As can be seen from Table 1 above, the range of the quantized RSRPs is [-140, 44] dBm, the measurement result less than the minimum value (i.e., - 140 dBm) is represented by an RSRP index and the measurement result greater than or equal to the maximum value (i.e., 44 dBm) is represented by an RSRP index. Therefore, a default value may be defined to be less than or equal to the minimum value in the quantity range, for example, the default RSRP is -141 dBm, which is less than the quantized minimum value. In this way, the quantized RSRPs may be represented as illustrated in the following table. When the corresponding RSRP index fed back by the second terminal device to the first terminal device is RSRP_15, it means that the second terminal device feeds back the default RSRP value, that is, the CSI-RS resource corresponding to the RSRP measurement value is not detected by the second terminal device.

For another example, the measured RSRP is quantized with 7 bits, as illustrated in Table 2 below.

Table 2

| Reported value | L1 RSRP | Unit |
|---|---|---|
| RSRP_0 | Not valid | dBm |
| RSRP_1 | Not valid | dBm |
| RSRP_2 | Not valid | dBm |
| RSRP_3 | Not valid | dBm |
| RSRP_4 | Not valid | dBm |

(continued)

| Reported value | L1 RSRP | Unit |
|---|---|---|
| RSRP_5 | Not valid | dBm |
| RSRP_6 | Not valid | dBm |
| RSRP_7 | Not valid | dBm |
| RSRP_8 | Not valid | dBm |
| RSRP_9 | Not valid | dBm |
| RSRP_10 | Not valid | dBm |
| RSRP_11 | Not valid | dBm |
| RSRP_12 | Not valid | dBm |
| RSRP_13 | Not valid | dBm |
| RSRP_14 | Not valid | dBm |
| RSRP_15 | $RSRP < -141$ | dBm |
| RSRP_16 | $-141 \leq RSRP < -140$ | dBm |
| RSRP_17 | $-140 \leq RSRP < -139$ | dBm |
| RSRP_18 | $-139 \leq RSRP < -138$ | dBm |
| ... | | ... |
| RSRP_111 | $-46 \leq RSRP < -45$ | dBm |
| RSRP_112 | $-45 \leq RSRP < -44$ | dBm |
| RSRP_113 | $-44 \leq RSRP$ | dBm |
| RSRP_114 | Not valid | dBm |
| RSRP_115 | Not valid | dBm |
| RSRP_116 | Not valid | dBm |
| RSRP_117 | Not valid | dBm |
| RSRP_118 | Not valid | dBm |
| RSRP_119 | Not valid | dBm |
| RSRP_120 | Not valid | dBm |
| RSRP_121 | Not valid | dBm |
| RSRP_122 | Not valid | dBm |
| RSRP_123 | Not valid | dBm |
| RSRP_124 | Not valid | dBm |
| RSRP_125 | Not valid | dBm |
| RSRP_126 | Not valid | dBm |
| RSRP_127 | Infinity | dBm |

For another example, the default RSRP is set to negative infinity (or a very small value, such as -1000 dBm), or the default RSRP is set to infinity (or a very great value, such as 1000 dBm). At this time, the quantized RSRPs may be represented as illustrated in Tables 3-1 and 3-2 below, respectively. When the corresponding RSRP index fed back by the second terminal device to the first terminal device is RSRP_0 in Table 3-1 (or RSRP_127 in Table 3-2), it means that the second terminal device feeds back the default RSRP value, that is, the CSI-RS resource corresponding to the RSRP measurement value is not detected by the second terminal device.

Table 3-1

| Reported value | L1 RSRP | Unit |
|---|---|---|
| RSRP_0 | -Infinity | dBm |
| RSRP_1 | Not valid | dBm |
| RSRP_2 | Not valid | dBm |
| RSRP_3 | Not valid | dBm |
| RSRP_4 | Not valid | dBm |
| RSRP_5 | Not valid | dBm |
| RSRP_6 | Not valid | dBm |
| RSRP_7 | Not valid | dBm |
| RSRP_8 | Not valid | dBm |
| RSRP_9 | Not valid | dBm |
| RSRP_10 | Not valid | dBm |
| RSRP_11 | Not valid | dBm |
| RSRP_12 | Not valid | dBm |
| RSRP_13 | Not valid | dBm |
| RSRP_14 | Not valid | dBm |
| RSRP_15 | Not valid | dBm |
| RSRP_16 | RSRP<-140 | dBm |
| RSRP_17 | -140≤RSRP<-139 | dBm |
| RSRP_18 | -139≤RSRP<-138 | dBm |
| ... | | ... |
| RSRP_111 | -46≤RSRP<-45 | dBm |
| RSRP_112 | -45≤RSRP<-44 | dBm |
| RSRP_113 | -44≤RSRP | dBm |
| RSRP_114 | Not valid | dBm |
| RSRP_15 | Not valid | dBm |
| RSRP_116 | Not valid | dBm |
| RSRP_117 | Not valid | dBm |
| RSRP_118 | Not valid | dBm |
| RSRP_119 | Not valid | dBm |
| RSRP_120 | Not valid | dBm |
| RSRP_121 | Not valid | dBm |
| RSRP_122 | Not valid | dBm |
| RSRP_123 | Not valid | dBm |
| RSRP_124 | Not valid | dBm |
| RSRP_125 | Not valid | dBm |
| RSRP_126 | Not valid | dBm |
| RSRP_127 | Not valid | dBm |

Table 3-2

| Reported value | L1 RSRP | Unit |
|---|---|---|
| RSRP_0 | Not valid | dBm |
| RSRP_1 | Not valid | dBm |
| RSRP_2 | Not valid | dBm |
| RSRP_3 | Not valid | dBm |
| RSRP_4 | Not valid | dBm |
| RSRP_5 | Not valid | dBm |
| RSRP_6 | Not valid | dBm |
| RSRP_7 | Not valid | dBm |
| RSRP_8 | Not valid | dBm |
| RSRP_9 | Not valid | dBm |
| RSRP_10 | Not valid | dBm |
| RSRP_11 | Not valid | dBm |
| RSRP_12 | Not valid | dBm |
| RSRP_13 | Not valid | dBm |
| RSRP_14 | Not valid | dBm |
| RSRP_15 | Not valid | dBm |
| RSRP_16 | RSRP<-140 | dBm |
| RSRP_17 | -140≤RSRP<-139 | dBm |
| RSRP_18 | -139≤RSRP<-138 | dBm |
| ... | | ... |
| RSRP_111 | -46≤RSRP<-45 | dBm |
| RSRP_112 | -45≤RSRP<-44 | dBm |
| RSRP_113 | -44≤RSRP | dBm |
| RSRP_114 | Not valid | dBm |
| RSRP_115 | Not valid | dBm |
| RSRP_116 | Not valid | dBm |
| RSRP_117 | Not valid | dBm |
| RSRP_118 | Not valid | dBm |
| RSRP_119 | Not valid | dBm |
| RSRP_120 | Not valid | dBm |
| RSRP_121 | Not valid | dBm |
| RSRP_122 | Not valid | dBm |
| RSRP_123 | Not valid | dBm |
| RSRP_124 | Not valid | dBm |
| RSRP_125 | Not valid | dBm |
| RSRP_126 | Not valid | dBm |
| RSRP_127 | Infinity | dBm |

When the above examples are applicable to N CSI-RSs and measurement results of the N CSI-RSs fed back by the second terminal device, a corresponding RSRP result (for example, a 7-bit quantity result) is fed back for each measurement result. However, in general, in order to reduce the overhead of feedback signaling, the second terminal device usually uses differential RSRP feedback manner for multiple RSRP measurement results.

For example, when the second terminal device needs to feed back the information of N CSI-RS resources and respective RSRP measurement results for the N CSI-RS resources, for the CSI-RS resource with optimal RSRP measurement result, the second terminal device feeds back the CSI-RS corresponding to the optimal RSRP measurement result and the corresponding RSRP measurement result (such as the RSRP index after 7-bit quantity in above Table 1), but for the other N-1 measurement results, the differential RSRP feedback is usually used. The differential RSRP may include two situations.

In the first situation, the difference is relative to the optimal RSRP result.

For example, the second terminal device detects three CSI-RS resources, corresponding to CSI-RS resource 1, CSI-RS resource 2 and CSI-RS resource 3 respectively. The measurement is respectively performed on the three CSI-RS resources to obtain three RSRP results, which are RSRP1=-10 dBm, RSRP2=-20 dBm and RSRP3=-35 dBm, respectively. When differential RSRP feedback is used, the three RSRP results fed back by the second terminal device are:

the index 1 of CSI-RS resource 1 and the RSRP measurement result corresponding to the CSI-RS resource 1, i.e., RSRP1=-10 dBm;
the index 2 of CSI-RS resource 2 and its differential RSRP measurement result relative to RSRP1, i.e. Δ RSRP=-10 dB, the differential RSRP index corresponding to it being "DIFFRSRP _5" according to Table 4 below; and
the index 3 of CSI-RS resource 3 and its differential RSRP measurement result relative to RSRP1, i.e. Δ RSRP=-25 dB, the differential RSRP index corresponding to it being "DIFFRSRP_12" according to Table 4 below.

In the second situation, the difference is relative to the RSRP measurement result adjacent to its RSRP measurement result and the measurement result greater than or equal to its RSRP measurement result.

For example, the second terminal device detects three CSI-RS resources, i.e., CSI-RS resource 1, CSI-RS resource 2 and CSI-RS resource 3, and measurement is performed on the three CSI-RS resources to obtain three RSRP results, which are RSRP1=-10 dBm, RSRP2=-20 dBm and RSRP3=-35 dBm, respectively. When differential RSRP feedback isused, the three RSRP results fed back by the second terminal device are:

the index 1 of CSI-RS resource 1 and RSRP measurement result corresponding to it, i.e., RSRP1=-10 dBm;
the index 2 of CSI-RS resource 2 and differential RSRP measurement result relative to the RSRP1, i.e. Δ RSRP=-10 dB, the differential RSRP index corresponding to it being "DIFFRSRP _5" according to Table 4 below; and
the index 3 of CSI-RS resource 3 and differential RSRP measurement relative to RSRP2, i.e. Δ RSRP=-15 dB, the differential RSRP index corresponding to it being "DIFFRSRP _7" according to Table 4 below.

Table 4

| Reported value | Measured quantity value (difference in measured RSRP from strongest RSRP) | Unit |
|---|---|---|
| DIFFRSRP_0 | 0≥ΔRSRP>-2 | dB |
| DIFFRSRP_1 | -2≥ΔRSRP>-4 | dB |
| DIFFRSRP_2 | -4≥ΔRSRP>-6 | dB |
| DIFFRSRP_3 | -6≥ΔRSRP>-8 | dB |
| DIFFRSRP_4 | -8≥ΔRSRP>-10 | dB |
| DIFFRSRP_5 | -10≥ΔRSRP>-12 | dB |
| DIFFRSRP_6 | -12≥ΔRSRP>-14 | dB |
| DIFFRSRP_7 | -14≥ΔRSRP>-16 | dB |
| DIFFRSRP_8 | -16≥ΔRSRP>-18 | dB |
| DIFFRSRP_9 | -18≥ΔRSRP>-20 | dB |
| DIFFRSRP_10 | -20≥ΔRSRP>-22 | dB |
| DIFFRSRP_11 | -22≥ΔRSRP>-24 | dB |

(continued)

| Reported value | Measured quantity value (difference in measured RSRP from strongest RSRP) | Unit |
|---|---|---|
| DIFFRSRP_12 | $-24 \geq \Delta RSRP > -26$ | dB |
| DIFFRSRP_13 | $-26 \geq \Delta RSRP > -28$ | dB |
| DIFFRSRP_14 | $-28 \geq \Delta RSRP > -30$ | dB |
| DIFFRSRP_15 | $-30 \geq \Delta RSRP$ | dB |

In some embodiments, a default value of the differential RSRP may be defined when feedback is performed using the differential RSRP. For example, in Table 4, the last differential RSRP index (i.e., DIFFRSRP_15) is set to the default value. That is, when the differential RSRP fed back by the second terminal device corresponds to the index, it means that the CSI-RS resource associated with the differential RSRP measurement result is not detected by the second terminal device.

In some embodiments, the first information includes indexes of N3 CSI-RS resources, and the N3 CSI-RS resources are determined by the second terminal device according to the measurement results obtained by measuring the received CSI-RSs, N3 < N, N is the number of CSI-RS resources that the second terminal device needs to feed back or report, N3 and N are positive integers, and N≤M.

In some embodiments, the N3 CSI-RS resources correspond to CSI-RSs received by the second terminal device, or the N3 CSI-RS resources correspond to CSI-RSs received by the second terminal device with the corresponding measurement results greater than or equal to the first threshold value.

In some embodiments, the indexes of the N3 CSI-RS resources are arranged in the order from high to low of the measurement results corresponding to the N3 CSI-RS resources, or the indexes of the N3 CSI-RS resources are arranged in the order from low to high of the measurement results corresponding to the N3 CSI-RS resources. Specifically, reference may be made to the above description of quantization index information of measurement results corresponding to N CSI-RS resources, which will not be repeated here.

In some embodiments, the first information further includes second measurement information, and the second measurement information is used for indicating measurement results corresponding to the N3 CSI-RS resources.

In some embodiments, the second measurement information includes quantization index information of measurement results corresponding to the N3 CSI-RS resources respectively. Specifically, reference may be made to the above description of quantization index information of measurement results corresponding to N CSI-RS resources, which will not be repeated here.

In some embodiments, the second measurement information includes quantization index information of the second measurement result and N3-1 pieces of differential quantization index information. The second measurement result corresponds to the highest value among the measurement results corresponding to the N3 CSI-RS resources. Specifically, reference may be made to the above description of quantization index information of measurement results corresponding to N CSI-RS resources, which will not be repeated in the present disclosure.

In some embodiments, the first information further includes first indication information, and the first indication information is used for indicating the value of N3.

In some embodiments, the first information further includes second indication information, and the second indication information is used for indicating the value of N, or the second indication information is used for indicating the number of CSI-RS resources fed back by the second terminal device to the first terminal device, or the second indication information is used for indicating the number of measurement results fed back by the second terminal device to the first terminal device.

In some embodiments, the first terminal device acquires third indication information. The third indication information is used for indicating the value of the N.

In some embodiments, the first terminal device acquires the third indication information according to pre-configuration information. Alternatively, the first terminal device receives the third indication information transmitted by the network device. Alternatively, the first terminal device receives the third indication information transmitted by the second terminal device. Alternatively, the first terminal device receives the third indication information transmitted by the third terminal device. The third terminal device is a CH terminal of a communication group where the first terminal device and the second terminal device are located.

In some embodiments, the first terminal device transmits the fourth indication information to the second terminal device. The fourth indication information is used for indicating the value of the N.

In some embodiments, the second terminal device acquires the fourth indication information. The fourth indication information is used for indicating the value of the N.

In some embodiments, the second terminal device acquires the fourth indication information according to the pre-configuration information. Alternatively, the second terminal device receives the fourth indication information transmitted by the network device. Alternatively, the second terminal device receives the fourth indication information transmitted by the first terminal device. Alternatively, the second terminal device receives the fourth indication information transmitted by the third terminal device. The third terminal device is a CH terminal of a communication group where the first terminal device and the second terminal device are located.

In some embodiments, the measurement results include a sidelink RSRP and/or a sidelink SINR.

In some embodiments, the first information is carried by one of the following: Sidelink Control Information (SCI), a Media Access Control Control Element (MAC CE), a Physical Sidelink Feedback Channel (PSFCH), or a PC5-RRC signaling.

For a specific example, an information field included in the SCI, MAC CE, or PC5-RRC is used for indicating the value of the parameter N and/or N3.

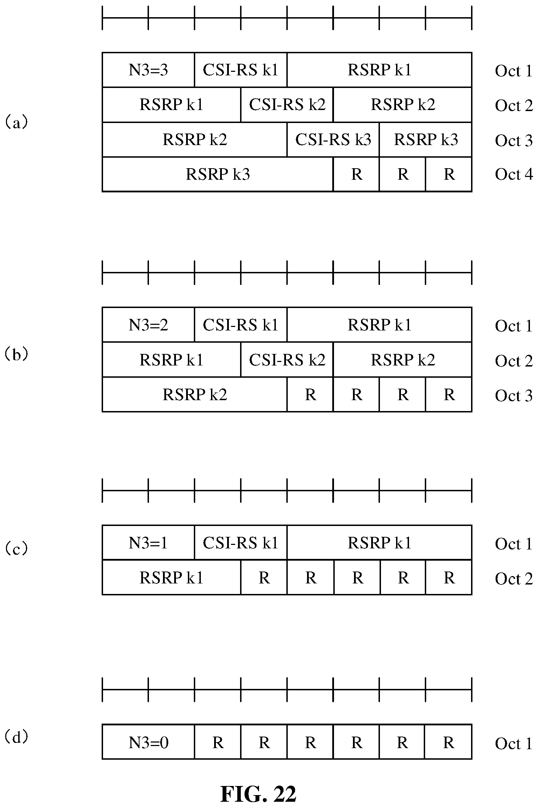

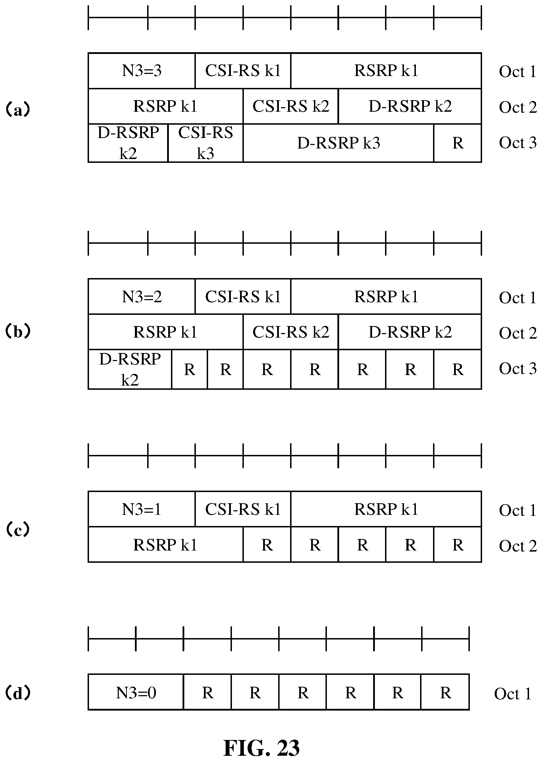

In some embodiments, when the MAC CE is used for carrying the first information, the format of the MAC CE may be as in FIG. 22 and/or FIG. 23.

For a specific example, for a RSRP to be fed back, when feeding back its corresponding quantized RSRP index (as illustrated in Table 1), that is, when each RSRP is represented by 7 bits, the indexes of N3 CSI-RS resources and RSRP measurement results corresponding to the N3 CSI-RS resources are included in the MAC CE, and the value of N3 indicated by the information field is also included. As illustrated in FIG. 22, N=3, that is, at most 3 CSI-RS resources and measurement results corresponding to the CSI-RS resources are fed back. The CSI-RS resource set includes 4 CSI-RS resources, so the indexes of the CSI-RSs are represented by 2 bits. The value of N3 is less than or equal to N, that is, N3 < = 3, so N3 needs to be represented by 2 bits. The k1/k2/k3 in the figures respectively represents the index information corresponding to three CSI-RS resources. In this manner, since each RSRP measurement result is represented by 7 bits, the order of various CSI-RS resources in MAC CE may not be arranged. Preferably, if the RSRP measurement result is greater, the more forward the position in MAC CE is. Oct1 represents the Byte 1, and so on. In FIG. 22, figures (a), (b), and (c) may correspond to situations where N3=3, N3=2, and N3=1, respectively.

In particular, when N3=0, that is, when the second terminal device does not receive any CSI-RS transmitted by the first terminal device, or the detected CSI-RS resources do not satisfy the condition, the second terminal device may transmit an indication message (i.e. second message) to the first terminal device to indicate that the second terminal device does not receive the CSI-RS, or to indicate that the first terminal device re-transmits the CSI-RS in turn. Alternatively, the second terminal device may transmit the indication information (i.e. second information) through the SCI, the MAC CE or the PC5-RRC. When the indication information (i.e. second information) is carried through the MAC CE, the indication information is illustrated in (d) of FIG. 22.

For another specific example, when differential RSRP is used for feedback, the highest RSRP measurement result is represented by 7 bits (as illustrated in Table 1), and other RSRP measurement results are represented by 4 bits differential RSRP (as illustrated in Table 4). The MAC CE includes indexes of the N3 CSI-RS resources and its corresponding RSRP measurement results. As illustrated in FIG. 23, N=3, that is, at most 3 CSI-RS resources and measurement results corresponding to the CSI-RS resources are fed back. The CSI-RS resource set includes 4 CSI-RS resources, so the indexes of the CSI-RSs are represented by 2 bits. The value of N3 is less than or equal to N, that is, N3 < = 3, so N3 also needs to be represented by 2 bits. The k1/k2/k3 in the figures respectively represents the index information corresponding to three CSI-RS resources. The CSI-RS k1 represents the CSI-RS resource corresponding to the highest RSRP measurement result. The CSI-RS k2 represents the CSI-RS resource corresponding to the second highest RSRP measurement result. The CSI-RS k3 represents the CSI-RS resource corresponding to the third highest RSRP measurement result. In this manner, in the MAC CE, the various CSI-RS resources is arranged in the order from high to low (or from low to high) of the RSRP measurement results. Oct1 represents the Byte 1, and so on. In FIG. 23, figures (a), (b), and (c) may correspond to situations where N3=3, N3=2, and N3=1, respectively.

In particular, when N3=0, that is, when the second terminal device does not receive any CSI-RS transmitted by the first terminal device, or the detected CSI-RS resources do not satisfy the condition, the second terminal device may transmit an indication message (i.e. second message) to the first terminal device to indicate that the second terminal device does not receive the CSI-RS, or to indicate that the first terminal device re-transmits the CSI-RS in turn. Alternatively, the second terminal device may transmit the indication information (i.e. second information) through the SCI, the MAC CE or the PC5-RRC. When the indication information (i.e. second information) is carried through the MAC CE, the indication information is illustrated in (d) of FIG. 23.

In some embodiments, the first terminal device selects a target CSI-RS resource according to the first information. A spatial domain transmission filter corresponding to the target CSI-RS resource is the target spatial domain transmission filter. Further, the first terminal device transmits the sidelink data to the second terminal device by using the target spatial domain transmission filter. Accordingly, the second terminal device receives the sidelink data transmitted by the first terminal device using the target spatial domain transmission filter corresponding to the target CSI-RS resource.

In some embodiments, the first terminal device transmits the first sidelink configuration information to the second terminal device. The first sidelink configuration information is used for configuring at least one Transmission Configuration Indicator (TCI) state. The at least one TCI state includes the first TCI state. A reference signal included in the first TCI state is a CSI-RS corresponding to the target CSI-RS resource.

In some embodiments, a Quasi-co-located (QCL) type included in the first TCI state is QCL-TypeD.

In some embodiments, the first terminal device transmits fifth indication information to the second terminal device. The fifth indication information is used for indicating the first TCI state. For example, the fifth indication information includes index information corresponding to the first TCI state.

In some embodiments, the fifth indication information is carried by one of: SCI, a MAC CE, or a PC5-RRC signaling.

In some embodiments, when the fifth indication information is carried by the SCI or MAC CE, the first terminal device indicates activation of sidelink feedback.

In some embodiments, the first terminal device receives second information transmitted by the second terminal device.

The second information is used for indicating that the CSI-RSs are not detected by the second terminal device. Alternatively, the second information is used for indicating that measurement results corresponding to the CSI-RSs detected by the second terminal device are all less than the first threshold value. Alternatively, the second information is used for instruct the first terminal device to re-transmit the M CSI-RSs by using the spatial domain transmission filters, respectively.

In some embodiments, the second information is carried by one of: SCI, a MAC CE, a PSFCH or a PC5-RRC signaling.

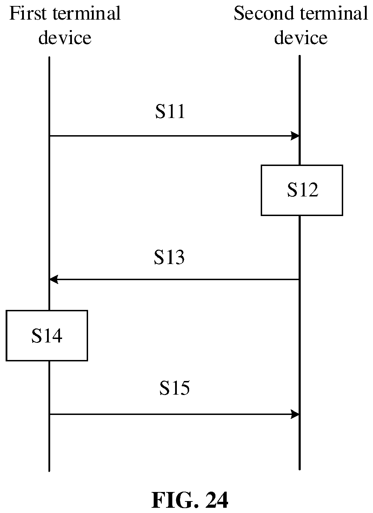

In some embodiments, a specific flow for the first terminal device determining the spatial domain transmission filters may be illustrated in FIG. 24. The above process of determining the optimal spatial domain transmission filter of the first terminal device may include the following operations S11 to S15.

In operation S11, the first terminal device transmits M CSI-RSs by using spatial domain transmission filters, respectively.

For a specific example, the first terminal device transmits M CSI-RS resources by using M spatial domain transmission filters, respectively. The different spatial domain transmission filters correspond to different CSI-RS resources. When the second terminal device feeds back the corresponding information of the CSI-RS resources, the first terminal device may determine the spatial domain transmission filters suitable for the first terminal device according to the correspondences between the spatial domain transmission filters and the CSI-RS resources.

In operations S12, the second terminal device measures the CSI-RSs transmitted by the first terminal device, such as measuring the RSRPs or SINRs, and selects N CSI-RS resources with optimal measurement results.

In operation S13, the second terminal device feeds back the information of optimal N CSI-RS resources and the measurement results corresponding to the optimal N CSI-RS resources to the first terminal device.

In operation S14, the first terminal device acquires the indexes of the CSI-RS resources and the RSRP measurement results transmitted by the second terminal device, and selects a CSI-RS resource from the CSI-RS resources, and further determines the spatial domain transmission filter information corresponding to the CSI-RS resource. Preferably, the first terminal device selects the CSI-RS resource corresponding to the optimal measurement result.

In operation S15, the first terminal device uses the selected CSI-RS resource to determine the spatial domain transmission filter information corresponding to the selected CSI-RS resource, and uses the spatial domain transmission filter to perform the sidelink transmission.

Therefore, in the embodiments of the present disclosure, it is possible to select an optimal spatial domain transmission filter between the first terminal device and the second terminal device.

Further, the first terminal device and the second terminal device acquire the number of to-be-fed back CSI-RS resources through information interaction or from network configuration information or pre-configuration information. When the number of CSI-RS resources detected by the second terminal device is less than the number of the to-be-fed back CSI-RS resources, the second terminal device transmits indication information to the first terminal device to indicate the number of CSI-RS resources actually fed back by the second terminal device.

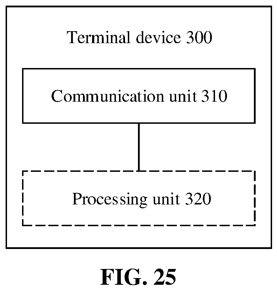

The method embodiments of the present disclosure have been described in detail above with reference to FIG. 13 to FIG. 24. The apparatus embodiments of the present disclosure are described in detail below with reference to FIG. 25 to FIG. 26. It should be understood that the apparatus embodiments and the method embodiments correspond to each other, and for the similar descriptions, the reference is made to the method embodiments.

FIG. 25 illustrates a schematic block diagram of a terminal device 300 according to an embodiment of the present disclosure. The terminal device 300 is the first terminal device. As shown in FIG. 25. The terminal device 300 includes a communication unit 310.

The communication unit 310 is configured to transmit M CSI-RSs to the second terminal device by using spatial domain transmission filters. The M CSI-RSs are used for selecting a target spatial domain transmission filter.

The M CSI-RSs correspond to multiple CSI-RS resources in a target CSI-RS resource set, and M is a positive integer.

In some embodiments, the communication unit 310 is further configured to receive the first information transmitted by the second terminal device.

The first information includes a target CSI report Quantity, and the target CSI report Quantity includes at least one of: CRI, CRI-RSRP or CRI-SINR.

In some embodiments, the first information includes indexes of N CSI-RS resources, or the first information is used for determining the indexes of the N CSI-RS resources. The N CSI-RS resources are determined by the second terminal device according to measurement results obtained by measuring received CSI-RSs. N is a number of CSI-RS resources that the second terminal device needs to feed back or report, N is a positive integer, and $N \leq M$.

In some embodiments, the indexes of the N CSI-RS resources are arranged in an order from high to low of the measurement results corresponding to the N CSI-RS resources, or the indexes of the N CSI-RS resources are arranged in an order from low to high of the measurement results corresponding to the N CSI-RS resources.

In some embodiments, the first information further includes first measurement information. The first measurement information is used for indicating the measurement results corresponding to the N CSI-RS resources.

In some embodiments, the measurement results corresponding to the N CSI-RS resources are greater than or equal to the first threshold value.

In some embodiments, the N CSI-RS resources correspond to first N CSI-RSs in the CSI-RSs received by the second terminal device which are arranged in the order from high to low of the measurement results.

In some embodiments, the N CSI-RS resources include N1 first-type CSI-RS resources and N2 second-type CSI-RS resources.

The N1 first-type CSI-RS resources correspond to CSI-RSs received by the second terminal device, or the N1 first-type CSI-RS resources correspond to CSI-RSs received by the second terminal device with measurement results greater than or equal to a first threshold value. Indexes corresponding to the N2 second-type CSI-RS resources are determined by at least one CSI-RS resource in the N1 first-type CSI-RS resources, or the indexes corresponding to the N2 second-type CSI-RS resources are determined by at least one CSI-RS resource in the multiple CSI-RS resources except the N1 first-type CSI-RS resources. Measurement results corresponding to the N2 second-type CSI-RS resources are default values, N1 and N2 are positive integers, and N1+N2 = N.

In some embodiments, the default values are pre-configured or agreed based on a protocol, or the default values are configured by a network device, or the default values are configured by the first terminal device to the second terminal device, or the default values are configured by the second terminal device to the first terminal device, or the default values are configured by a third terminal device. The third terminal device is a CH terminal of a communication group where the first terminal device and the second terminal device are located.

In some embodiments, the default values are less than or equal to a second threshold value, or the default values correspond to a negative infinity or infinity.

In some embodiments, the first measurement information includes quantization index information of measurement results corresponding to the N CSI-RS resources respectively.

In some embodiments, the first measurement information includes quantization index information of the first measurement result and N-1 pieces of differential quantization index information. The first measurement result corresponds to a highest value among the measurement results corresponding to the N CSI-RS resources.

In some embodiments, the first information includes indexes of N3 CSI-RS resources. The N3 CSI-RS resources are determined by the second terminal device according to measurement results obtained by measuring received CSI-RSs, and N3 < N. N is a number of CSI-RS resources that the second terminal device needs to feed back or report, N3 and N are positive integers, and $N \leq M$.

In some embodiments, the N3 CSI-RS resources correspond to CSI-RSs received by the second terminal device, or the N3 CSI-RS resources correspond to CSI-RSs received by the second terminal device with corresponding measurement results greater than or equal to a first threshold value.

In some embodiments, the indexes of the N3 CSI-RS resources are arranged in an order from high to low of the measurement results corresponding to the N3 CSI-RS resources, or the indexes of the N3 CSI-RS resources are arranged in an order from low to high of the measurement results corresponding to the N3 CSI-RS resources.

In some embodiments, the first information further includes the second measurement information. The second measurement information is used for indicating measurement results corresponding to the N3 CSI-RS resources.

In some embodiments, the second measurement information includes quantization index information of measurement results corresponding to the N3 CSI-RS resources respectively.

In some embodiments, the second measurement information includes quantization index information of the second measurement result and N3-1 pieces of differential quantization index information. The second measurement result corresponds to a highest value among the measurement results corresponding to the N3 CSI-RS resources.

In some embodiments, the first information further includes first indication information. The first indication information is used for indicating a value of N3.

In some embodiments, the first information further includes second indication information. The second indication information is used for indicating a value of N, or the second indication information is used for indicating a number of CSI-RS resources fed back by the second terminal device to the first terminal device, or the second indication information is used for indicating the number of measurement results fed back by the second terminal device to the first terminal device.

In some embodiments, the communication unit 310 is further configured to acquire the third indication information. The third indication information is used for indicating a value of the N.

In some embodiments, the communication unit 310 is specifically configured to acquire the third indication information according to pre-configuration information, or receive the third indication information transmitted by a network device, or receive the third indication information transmitted by the second terminal device, or receive the third indication information transmitted by the third terminal device. The third terminal device is a CH terminal of a communication group where the first terminal device and the second terminal device are located.

In some embodiments, the communication unit 310 is further configured to transmit fourth indication information to the second terminal device. The fourth indication information is used for indicating the value of the N.

In some embodiments, the measurement results include a sidelink RSRP and/or a sidelink SINR.

In some embodiments, the first information is carried by one of: SCI, a MAC CE, a PSFCH, or a PC5-RRC signaling.

In some embodiments, the terminal device 300 further includes a processing unit 320.

The processing unit 320 is configured to select a target CSI-RS resource according to the first information. A spatial domain transmission filter corresponding to the target CSI-RS resource is the target spatial domain transmission filter.

In some embodiments, the communication unit 310 is further configured to transmit the first sidelink configuration information to the second terminal device. The first sideink configuration information is used for configuring at least one TCI state. The at least one TCI state includes the first TCI state. A reference signal included in the first TCI state is a CSI-RS corresponding to the target CSI-RS resource.

In some embodiments, a QCL type included in the first TCI state is QCL-TypeD.

In some embodiments the communication unit 310 is further configured to transmit fifth indication information to the second terminal device. The fifth indication information is used for indicating the first TCI state.

In some embodiments, the communication unit 310 is configured to transmit sidelink data to the second terminal device by using the target spatial domain transmission filter.

In some embodiments, the communication unit 310 is further configured to receive second information transmitted by the second terminal device.

The second information is used for indicating that the CSI-RSs are not detected by the second terminal device, or the second information is used for indicating that measurement results corresponding to the CSI-RSs detected by the second terminal device are all less than a first threshold value, or the second information is used for indicating that the first terminal device re-transmits the M CSI-RSs.

In some embodiments, the communication unit 310 is configured to transmit the M CSI-RSs respectively to the second terminal device by re-using the spatial domain transmission filters.

In some embodiments, the first threshold value is pre-configured or agreed based on a protocol, or the first threshold value is configured by a network device, or the first threshold value is configured by the first terminal device.

In some embodiments, the second threshold value is pre-configured or agreed based on a protocol, or the second threshold value is configured by a network device, or the second threshold value is configured by the first terminal device.

In some embodiments, the above communication unit may be a communication interface, a transceiver, an input or output interface of a communication chip or a system-on-chip. The above processing unit may be one or more processors.

It should be understood that the terminal device 300 according to the embodiments of the present disclosure may correspond to the first terminal device in the method embodiments of the present disclosure, and the above and other operations and/or functions of the various units in the terminal device 300 are used for implementing the corresponding flows of the first terminal device in the method 200 illustrated in FIG. 13, respectively, which are not repeated in the present disclosure for the sake of brevity.

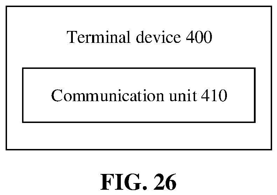

FIG. 26 illustrated a schematic block diagram of a terminal device 400 according to an embodiment of the present disclosure. The terminal device 400 is the second terminal device. As shown in FIG. 26, the terminal device 400 includes a communication unit 410.

The communication unit 410 is configured to receive M CSI-RSs transmitted by the first terminal device by using spatial domain transmission filters. The M CSI-RSs are used for selecting a target spatial domain transmission filter, the M CSI-RSs correspond to multiple CSI-RS resources in a target CSI-RS resource set, and M is a positive integer.

In some embodiments, the communication unit 410 is further configured to transmit first information to the first terminal device.

The first information includes a target CSI report Quantity, and the target CSI report Quantity includes at least one of: a CRI, a CRI-RSRP, or a CRI-SINR.

In some embodiments, the first information includes indexes of N CSI-RS resources, or the first information is used for determining the indexes of the N CSI-RS resources. The N CSI-RS resources are determined by the second terminal device according to measurement results obtained by measuring received CSI-RSs. N is the number of CSI-RS resources that the second terminal device needs to feedback or report, N is a positive integer, and N ≤ M.

In some embodiments, the indexes of the N CSI-RS resources are arranged in an order from high to low of the measurement results corresponding to the N CSI-RS resources, or the indexes of the N CSI-RS resources are arranged in an order from low to high of the measurement results corresponding to the N CSI-RS resources.

In some embodiments, the first information further includes first measurement information. The first measurement information is used for indicating the measurement results corresponding to the N CSI-RS resources.

In some embodiments, the measurement results corresponding to the N CSI-RS resources are greater than or equal to the first threshold value.

In some embodiments, the N CSI-RS resources correspond to first N CSI-RSs in the CSI-RSs received by the second terminal device which are arranged in the order from high to low of the measurement results.

In some embodiments, the N CSI-RS resources include N1 first-type CSI-RS resources and N2 second-type CSI-RS resources.

The N1 first-type CSI-RS resources correspond to CSI-RSs received by the second terminal device, or the N1 first-type CSI-RS resources correspond to CSI-RSs received by the second terminal device with measurement results greater than or equal to a first threshold value. Indexes corresponding to the N2 second-type CSI-RS resources are determined by at least one CSI-RS resource in the N1 first-type CSI-RS resources, or the indexes corresponding to the N2 second-type CSI-RS resources are determined by at least one CSI-RS resource in the multiple CSI-RS resources except the N1 first-type CSI-RS resources. Measurement results corresponding to the N2 second-type CSI-RS resources are default values, N1 and N2 are positive integers, and N1+N2 = N.

In some embodiments, the default values are pre-configured or agreed based on a protocol, or the default values are configured by a network device, or the default values are configured by the first terminal device to the second terminal device, or the default values are configured by the second terminal device to the first terminal device, or the default values are configured by a third terminal device. The third terminal device is a CH terminal of a communication group where the first terminal device and the second terminal device are located.

In some embodiments, the default values are less than or equal to the second threshold value, or the default values correspond to a negative infinity or infinity.

In some embodiments, the first measurement information includes quantization index information of measurement results corresponding to the N CSI-RS resources respectively.

In some embodiments, the first measurement information includes quantization index information of the first measurement result and N-1 pieces of differential quantization index information. The first measurement result corresponds to a highest value among the measurement results corresponding to the N CSI-RS resources.

In some embodiments, the first information includes indexes of N3 CSI-RS resources. The N3 CSI-RS resources are determined by the second terminal device according to measurement results obtained by measuring received CSI-RSs, and N3 < N. N is a number of CSI-RS resources that the second terminal device needs to feedback or report, N3 and N are positive integers, and N ≤ M.

In some embodiments, the N3 CSI-RS resources correspond to CSI-RSs received by the second terminal device, or the N3 CSI-RS resources correspond to CSI-RSs received by the second terminal device with corresponding measurement results greater than or equal to a first threshold value.

In some embodiments, the indexes of the N3 CSI-RS resources are arranged in an order from high to low of the measurement results corresponding to the N3 CSI-RS resources, or the indexes of the N3 CSI-RS resources are arranged in an order from low to high of the measurement results corresponding to the N3 CSI-RS resources.

In some embodiments, the first information further includes second measurement information. The second measurement information is used for indicating measurement results corresponding to the N3 CSI-RS resources.

In some embodiments, the second measurement information includes quantization index information of measurement results corresponding to the N3 CSI-RS resources respectively.

In some embodiments, the second measurement information includes quantization index information of the second measurement result and N3-1 pieces of differential quantization index information. The second measurement result corresponds to a highest value among the measurement results corresponding to the N3 CSI-RS resources.

In some embodiments, the first information further includes first indication information. The first indication information is used for indicating a value of N3.

In some embodiments, the first information further includes the second indication information. The second indication information is used for indicating a value of N, or the second indication information is used for indicating a number of CSI-RS resources fed back by the second terminal device to the first terminal device, or the second indication information for indicating the number of measurement results fed back by the second terminal device to the first terminal device.

In some embodiments, the communication unit 410 is further configured to acquire fourth indication information. The fourth indication information is used for indicating a value of the N.

In some embodiments, the communication unit 410 is specifically configured to acquire the fourth indication information according to pre-configuration information, or receive the fourth indication information transmitted by a network device, or receive the fourth indication information transmitted by the first terminal device, or receive the fourth indication information transmitted by the third terminal device. The third terminal device is a CH terminal of a communication group where the first terminal device and the second terminal device are located.

In some embodiments, the measurement results include a sidelink RSRP and/or a sidelink SINR.

In some embodiments, the first information is carried by one of: SCI, a MAC CE, a PSFCH or a PC5-RRC signaling.

In some embodiments, the communication unit 410 is further configured to receive first sidelink configuration information transmitted by the first terminal device. The first sideink configuration information is used for configuring at least one TCI state. The at least one TCI state includes the first TCI state. A reference signal included in the first TCI state is a CSI-RS corresponding to a target CSI-RS resource. The target CSI-RS resource is determined by the first terminal device according to the first information. A spatial domain transmission filter corresponding to the target CSI-RS resource is the target spatial domain transmission filter.

In some embodiments, the QCL type included in the first TCI state is QCL-TypeD.

In some embodiments, the communication unit 410 is further configured to receive fifth indication information transmitted by the first terminal device. The fifth indication information is used for indicating the first TCI state.

In some embodiments, the communication unit 410 is further configured to receive sidelink data transmitted by the first terminal device by using the target spatial domain transmission filter corresponding to the target CSI-RS resource.

In some embodiments, the communication unit 410 is further configured to transmit the second information to the first terminal device.

The second information is used for indicating that the CSI-RSs are not detected by the second terminal device, or the second information is used for indicating that measurement results corresponding to the CSI-RSs detected by the second terminal device are all less than a first threshold value, or the second information is used for indicating that the first terminal device re-transmits the M CSI-RSs.

In some embodiments, the communication unit 410 is further configured to receive the M CSI-RSs re-transmitted by the first terminal device.

In some embodiments, the first threshold value is pre-configured or agreed based on a protocol, or the first threshold value is configured by a network device, or the first threshold value is configured by the first terminal device.

In some embodiments, the second threshold value is pre-configured or agreed based on a protocol, or the second threshold value is configured by a network device, or the second threshold value is configured by the first terminal device.

In some embodiments, the above communication unit may be a communication interface, a transceiver, an input or output interface of a communication chip or a system-on-chip.

It should be understood that the terminal device 400 according to the embodiments of the present disclosure may correspond to the second terminal device in the method embodiments of the present disclosure, and the above and other operations and/or functions of the various units in the terminal device 400 are used for implementing the corresponding flows of the second terminal device in the method 200 illustrated in FIG. 13, respectively, which are not repeated in the present disclosure for the sake of brevity.

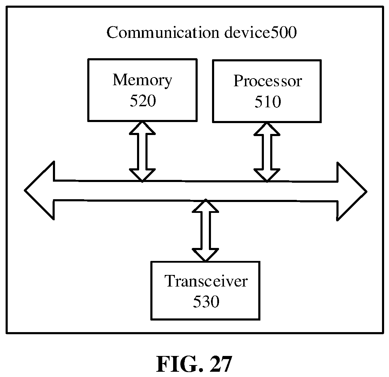

FIG. 27 is a schematic structural diagram of a communication device 500 provided by an embodiment of the present disclosure. The communication device 500 illustrated in FIG. 27 includes a processor 510. The processor 510 may invoke and run computer programs from a memory to implement the methods in the embodiments of the present disclosure.

In some embodiments, as illustrated in FIG. 27, the communication device 500 may further include a memory 520. The processor 510 may invoke and run computer programs from the memory 520 to implement the methods in the embodiments of the present disclosure.

The memory 520 may be a separate device independent of the processor 510 or may be integrated in the processor 510.

In some embodiments, as illustrated in FIG. 27, the communication device 500 may further include a transceiver 530. The processor 510 may control the transceiver 530 to communicate with other devices, and in particular may transmit or receive information or data to or from other devices.

The transceiver 530 may include a transmitter and a receiver. The transceiver 530 may further include antennas, and the number of antennas may be one or more.

In some embodiments, the communication device 500 may specifically be a terminal device in the embodiments of the present disclosure, and the communication device 500 may implement corresponding flows implemented by the first terminal device in various method embodiments of the present disclosure, which will not be repeated in the present disclosure for the sake of brevity.

In some embodiments, the communication device 500 may specifically be a terminal device in the embodiments of the present disclosure, and the communication device 500 may implement corresponding flows implemented by the second terminal device in various method embodiments of the present disclosure, which will not be repeated in the present disclosure for the sake of brevity.

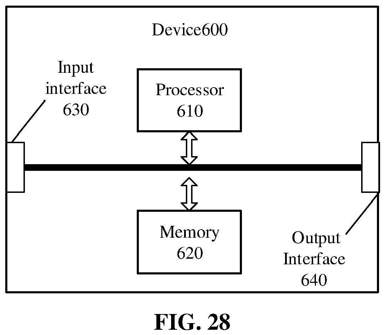

FIG. 28 is a schematic structural diagram of a device according to an embodiment of the present disclosure. The device 600 illustrated in FIG. 28 includes a processor 610. The processor 610 may invoke and run computer programs from a memory to implement the methods in the embodiments of the present disclosure.

In some embodiments, as illustrated in FIG. 28, the device 600 may further include a memory 620. The processor 610 may invoke and run computer programs from the memory 620 to implement the methods in the embodiments of the present disclosure.

The memory 620 may be a separate device independent of the processor 610 or may be integrated in the processor 610.

In some embodiments, the device 600 may further include an input interface 630. The processor 610 may control the input interface 630 to communicate with other devices or chips, and in particular may obtain information or data transmitted by other devices or chips.

In some embodiments, the device 600 may further include an output Interface 640. The processor 610 may control the output interface 640 to communicate with other devices or chips, and in particular may output information or data to other devices or chips.

In some embodiments, the device may be applied to the terminal device in the embodiments of the present disclosure, and the device may implement corresponding flows implemented by the first terminal device in the various methods of the embodiments of the present disclosure, which will not be repeated in the present disclosure for the sake of brevity.

In some embodiments, the device may be applied to the terminal device in the embodiments of the present disclosure, and the device may implement corresponding flows implemented by the second terminal device in the various methods of the embodiments of the present disclosure, which will not be repeated in the present disclosure for the sake of brevity.

In some embodiments, the device mentioned in the embodiments of the present disclosure may also be a chip. For example, it may be a system level chip, a system chip, a chip system or a system-on-chip.

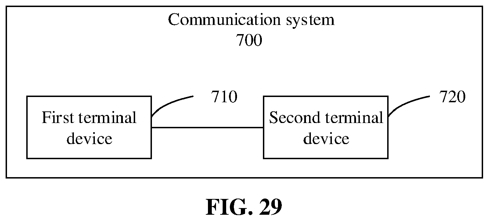

FIG. 29 is a schematic block diagram of a communication system 700 provided by an embodiment of the present disclosure. As illustrated in FIG. 29, the communication system 700 includes the first terminal device 710 and the second terminal device 720.

The first terminal device 710 may be used to implement the corresponding functions implemented by the first terminal device in the above methods. The second terminal device 720 may be used to implement the corresponding functions implemented by the second terminal device in the above methods, which will not be repeated in the present disclosure for the sake of brevity.

It should be understood that the processors in the embodiments of the present disclosure may be integrated circuit chips having signal processing capability. In implementation, the various operations of the above method embodiments may be accomplished by integrated logic circuitry of hardware in the processors or instructions in the form of software. The above processors may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure may be directly embodied as the execution of the hardware decoding processor or the combined execution of the hardware and software modules in the decoding processor. The software module may be located in a Random Access Memory (RAM), a flash memory, a Read-Only Memory (ROM), a Programmable ROM (PROM) or an Electrically Erasable PROM (EEPROM), a register and other storage medium mature in the art. The storage medium is located in the memory, and the processor reads the information in the memory and completes the operations of the methods in combination with its hardware.

It is understood that the memory in embodiments of the present disclosure may be a volatile memory or a non-volatile memory or may include both volatile and non-volatile memory. The non-volatile memory may be a ROM, a PROM, an Erasable PROM (EPROM), an EEPROM, or a flash memory. The volatile memory may be a RAM which serves as an external cache. By way of illustration, but not limitation, many forms of RAM are available, such as a static RAM (SRAM), a Dynamic RAM (DRAM), a synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory in the systems and methods described in the present disclosure is intended to include but not limited to these and any other suitable types of memory.

It should be understood that the memory described above is exemplary, but not limiting, and, for example, the memory in embodiments of the present disclosure may also be a SRAM, a DRAM, a SDRAM, a DDR SDRAM, an ESDRAM, a SLDRAM, a DR RAM, etc. That is, the memory in embodiments of the present disclosure is intended to include but not limited to these and any other suitable types of memory.

The embodiments of the present disclosure further provide a computer readable storage medium for storing computer programs.

In some embodiments, the computer readable storage medium may be applied to the terminal device in the embodiments of the present disclosure. The computer programs cause the computer to execute the corresponding flows implemented by the first terminal device in the various methods of the embodiments of the present disclosure, which will not be repeated in the present disclosure for the sake of brevity.

In some embodiments, the computer readable storage medium may be applied to the terminal device in the embodiments of the present disclosure. The computer program cause the computer to execute the corresponding flows implemented by the second terminal device in the various methods of the embodiments of the present disclosure, which will not be repeated in the present disclosure for the sake of brevity.

The embodiments of the present disclosure further provide a computer program product including computer program instructions.

In some embodiments, the computer program product may be applied to the terminal device in the embodiments of the present disclosure, and the computer program instructions cause the computer to execute the corresponding flows implemented by the first terminal device in the various methods of the embodiments of the present disclosure, which will not be repeated in the present disclosure for the sake of brevity.

In some embodiments, the computer program product may be applied to the terminal device in the embodiments of the present disclosure, and the computer program instructions cause the computer to execute the corresponding flows implemented by the second terminal device in the various methods of the embodiments of the present disclosure, which will not be repeated in the present disclosure for the sake of brevity.

The embodiments of the present disclosure further provide a computer program.

In some embodiments, the computer program may be applied to a terminal device in the embodiments of the present disclosure. When the computer program is run on the computer, the computer executes the corresponding flows implemented by the first terminal device in the various methods of the embodiments of the present disclosure, which will not be repeated in the present disclosure for the sake of brevity.

In some embodiments, the computer program may be applied to a terminal device in the embodiments of the present disclosure. When the computer program is run on the computer, the computer executes the corresponding flows implemented by the second terminal device in the various methods of the embodiments of the present disclosure, which will not be repeated in the present disclosure for the sake of brevity.

Those of ordinary skill in the art will appreciate that the various example units and algorithm steps described in connection with the embodiments disclosed in the present disclosure may be implemented in electronic hardware or a combination of computer software and electronic hardware. Whether these functions are performed in hardware or software depends on the specific application and design constraints of the technical solutions. Skilled artisans may use different methods for each particular application to implement the described functionality, but such implementation should not be considered outside the scope of the present disclosure.

Those skilled in the art will clearly appreciate that, for convenience and conciseness of description, the specific operating processes of the above-described systems, apparatuses and units may refer to the corresponding processes in the aforementioned method embodiments, which will not be repeated in the present disclosure.

In several embodiments provided in the present disclosure, it should be understood that the disclosed systems, apparatuses and methods may be implemented in other ways. For example, the above-described embodiments of the devices are only schematic, for example, the division of the units is only a logical function division, and in practice, there may be another division manner. For example, multiple units or components may be combined or integrated into another system, or some features may be ignored or not performed. On the other hand, the coupling or direct coupling or communication connection between each other shown or discussed may be indirect coupling or communication connection through some interface, device or unit, and may be electrical, mechanical or other form.

The units illustrated as separate components may or may not be physically separated, and the components displayed as units may or may not be physical units. That is, the components may be located in one place, or may be distributed over multiple network units. Part or all of the units may be selected according to the actual needs to achieve the purpose of the embodiments.

In addition, various functional units in various embodiments of the present disclosure may be integrated in one processing unit, various units may exist physically alone, or two or more units may be integrated in one unit.

The functions may be stored in a computer readable storage medium if implemented in the form of software functional units and sold or used as stand-alone products. With this understanding, the technical solutions of the present disclosure in essence or in part contributing to the prior art may be embodied in the form of a software product. The computer software product is stored in a storage medium including instructions for causing a computer device (which may be a personal computer, a server, a network device, etc.) to perform all or part of the operations of the methods described in various embodiments of the present disclosure. The aforementioned storage medium includes a U disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any person skilled in the art who is familiar with the technical filed can readily think of modifications or substitutions in the technical scope disclosed in the present disclosure, which should fall within the protection scope of the present disclosure. Therefore, the protection scope of the present disclosure should be subject to the protection scope of the claims.

**Claims**

1. A method for wireless communication, comprising:

   transmitting, by a first terminal device, M Channel State Information Reference Signals (CSI-RSs) to a second terminal device by using spatial domain transmission filters, wherein the M CSI-RSs are used for selecting a target spatial domain transmission filter,
   wherein the M CSI-RSs correspond to a plurality of CSI-RS resources in a target CSI-RS resource set, and M is a positive integer.

2. The method of claim 1, further comprising:

   receiving, by the first terminal device, first information transmitted by the second terminal device,
   wherein the first information includes a target Channel State Information (CSI) report quantity, and the target CSI report quantity comprises at least one of:
   CSI-RS Resource Indicator (CRI), CRI-Reference Signal Received Power (CRI-RSRP), or CRI-Received Signal Strength Indicator (CRI-SINR).

3. The method of claim 2, wherein the first information comprises indexes of N CSI-RS resources, or the first information is used for determining the indexes of the N CSI-RS resources, the N CSI-RS resources are determined by the second terminal device according to measurement results obtained by measuring received CSI-RSs, N is a number of CSI-RS resources that the second terminal device needs to feed back or report, N is a positive integer, and $N \leq M$.

4. The method of claim 3, wherein the indexes of the N CSI-RS resources are arranged in an order from high to low of the measurement results corresponding to the N CSI-RS resources, or the indexes of the N CSI-RS resources are arranged in an order from low to high of the measurement results corresponding to the N CSI-RS resources.

5. The method of claim 3 or 4, wherein the first information further comprises first measurement information, and the first measurement information is used for indicating the measurement results corresponding to the N CSI-RS resources.

6. The method of claim 5, wherein the measurement results corresponding to the N CSI-RS resources are greater than or equal to a first threshold value.

7. The method of claim 5 or 6, wherein the N CSI-RS resources correspond to first N CSI-RSs in the CSI-RSs received by the second terminal device which are arranged in the order from high to low of the measurement results.

8. The method of claim 5, wherein,

   the N CSI-RS resources comprise N1 first-type CSI-RS resources and N2 second-type CSI-RS resources,
   wherein the N1 first-type CSI-RS resources correspond to CSI-RSs received by the second terminal device, or the N1 first-type CSI-RS resources correspond to CSI-RSs received by the second terminal device with measurement results greater than or equal to a first threshold value, indexes corresponding to the N2 second-type CSI-RS resources are determined by at least one CSI-RS resource in the N1 first-type CSI-RS resources, or the indexes corresponding to the N2 second-type CSI-RS resources are determined by at least one CSI-RS resource in the plurality of CSI-RS resources except the N1 first-type CSI-RS resources, measurement results corresponding to the N2 second-type CSI-RS resources are default values, N1 and N2 are positive integers, and N1+N2 = N.

9. The method of claim 8, wherein the default values are pre-configured or agreed based on a protocol, or the default values are configured by a network device, or the default values are configured by the first terminal device to the second terminal device, or the default values are configured by the second terminal device to the first terminal device, or the default values are configured by a third terminal device, and the third terminal device is a cluster header (CH) terminal of a communication group where the first terminal device and the second terminal device are located.

10. The method of claim 8 or 9, wherein the default values are less than or equal to a second threshold value, or the default values correspond to a negative infinity or infinity.

11. The method of any one of claims 5 to 10, wherein the first measurement information comprises quantization index information of measurement results corresponding to the N CSI-RS resources respectively.

12. The method of any one of claims 5 to 7, wherein the first measurement information comprises quantization index information of a first measurement result and N-1 pieces of differential quantization index information, and the first measurement result corresponds to a highest value among the measurement results corresponding to the N CSI-RS resources.

13. The method of claim 2, wherein the first information comprises indexes of N3 CSI-RS resources, and the N3 CSI-RS resources are determined by the second terminal device according to measurement results obtained by measuring received CSI-RSs, N3 < N, N is a number of CSI-RS resources that the second terminal device needs to feed back or report, N3 and N are positive integers, and N ≤ M.

14. The method of claim 13, wherein the N3 CSI-RS resources correspond to CSI-RSs received by the second terminal device, or the N3 CSI-RS resources correspond to CSI-RSs received by the second terminal device with corresponding measurement results greater than or equal to a first threshold value.

15. The method of claim 13 or 14, wherein the indexes of the N3 CSI-RS resources are arranged in an order from high to low of the measurement results corresponding to the N3 CSI-RS resources, or the indexes of the N3 CSI-RS resources are arranged in an order from low to high of the measurement results corresponding to the N3 CSI-RS resources.

16. The method of any one of claims 13 to 15, wherein the first information further comprises second measurement information, and the second measurement information is used for indicating measurement results corresponding to the N3 CSI-RS resources.

17. The method of claim 16, wherein the second measurement information comprises quantization index information of measurement results corresponding to the N3 CSI-RS resources respectively.

18. The method of claim 16 or 17, wherein the second measurement information comprises quantization index information of a second measurement result and N3-1 pieces of differential quantization index information, and the second measurement result corresponds to a highest value among the measurement results corresponding to the N3 CSI-RS resources.

19. The method of any one of claims 13 to 18, wherein the first information further comprises first indication information, and the first indication information is used for indicating a value of N3.

20. The method of any one of claims 3 to 19, wherein the first information further comprises second indication information, the second indication information is used for indicating a value of N, or the second indication information is used for indicating a number of CSI-RS resources fed back by the second terminal device to the first terminal device, or the second indication information is used for indicating a number of measurement results fed back by the second terminal device to the first terminal device.

21. The method of any one of claims 3 to 19, further comprising:
acquiring, by the first terminal device, third indication information, wherein the third indication information is used for indicating a value of the N.

22. The method of claim 21, wherein acquiring, by the first terminal device, the third indication information comprises:
acquiring, by the first terminal device, the third indication information according to pre-configuration information, or receiving, by the first terminal device, the third indication information transmitted by a network device, or receiving, by the first terminal device, the third indication information transmitted by the second terminal device, or receiving, by the first terminal device, the third indication information transmitted by the third terminal device, wherein the third terminal device is a CH terminal of a communication group where the first terminal device and the second terminal device are located.

23. The method of claim 22, further comprising:
transmitting, by the first terminal device, fourth indication information to the second terminal device, wherein the fourth indication information is used for indicating the value of the N.

24. The method of any one of claims 3 to 23, wherein the measurement results comprise a sidelink RSRP and/or a sidelink SINR.

25. The method of any one of claims 2 to 24, wherein the first information is carried by one of:
Sidelink Control Information (SCI), a Media Access Control Control Element (MAC CE), a Physical Sidelink Feedback Channel (PSFCH), or a PC5-Radio Resource Control (RRC) signaling.

26. The method of any one of claims 2 to 25, further comprising:
selecting, by the first terminal device, a target CSI-RS resource according to the first information, wherein a spatial domain transmission filter corresponding to the target CSI-RS resource is the target spatial domain transmission filter.

27. The method of claim 26, further comprising:
transmitting, by the first terminal device, first sidelink configuration information to the second terminal device, wherein the first sideink configuration information is used for configuring at least one Transmission Configuration Indicator (TCI) state, the at least one TCI state comprises a first TCI state, and a reference signal comprised in the first TCI state is a CSI-RS corresponding to the target CSI-RS resource.

28. The method of claim 27, wherein a Quasi-co-located (QCL) type comprised in the first TCI state is QCL-TypeD.

29. The method of claim 27 or 28, further comprising:
transmitting, by the first terminal device, fifth indication information to the second terminal device, wherein the fifth indication information is used for indicating the first TCI state.

30. The method of any one of claims 26 to 29, further comprising:
transmitting, by the first terminal device, sidelink data to the second terminal device by using the target spatial domain transmission filter.

31. The method of claim 1, further comprising:

receiving, by the first terminal device, second information transmitted by the second terminal device, wherein the second information is used for indicating that the CSI-RSs are not detected by the second terminal device, or the second information is used for indicating that measurement results corresponding to the CSI-RSs detected by the second terminal device are all less than a first threshold value, or the second information is used for indicating that the first terminal device re-transmits the M CSI-RSs.

32. The method of claim 31, further comprising:
transmitting, by the first terminal device, the M CSI-RSs respectively to the second terminal device by re-using the spatial domain transmission filters.

33. The method of claim 6, 8, 14, or 31, wherein the first threshold value is pre-configured or agreed based on a protocol, or the first threshold value is configured by a network device, or the first threshold value is configured by the first terminal device.

34. The method of claim 10, wherein the second threshold value is pre-configured or agreed based on a protocol, or the second threshold value is configured by a network device, or the second threshold value is configured by the first terminal device.

35. A method for wireless communication, comprising:
receiving, by a second terminal device, M Channel State Information Reference Signals (CSI-RSs) transmitted by a first terminal device by using spatial domain transmission filters, wherein the M CSI-RSs are used for selecting a target spatial domain transmission filter, the M CSI-RSs correspond to a plurality of CSI-RS resources in a target CSI-RS resource set, and M is a positive integer.

36. The method of claim 35, further comprising:

transmitting, by the second terminal device, first information to the first terminal device,
wherein the first information includes a target Channel State Information (CSI) report quantity, and the target CSI report quantity comprises at least one of:
CSI-RS Resource Indicator (CRI), CRI-Reference Signal Received Power (CRI-RSRP), or CRI-Received Signal Strength Indicator (CRI-SINR).

37. The method of claim 36, wherein the first information comprises indexes of N CSI-RS resources, or the first information is used for determining the indexes of the N CSI-RS resources, the N CSI-RS resources are determined by the second terminal device according to measurement results obtained by measuring received CSI-RSs, N is a number of CSI-RS resources that the second terminal device needs to feedback or report, N is a positive integer, and $N \leq M$.

38. The method of claim 37, wherein the indexes of the N CSI-RS resources are arranged in an order from high to low of the measurement results corresponding to the N CSI-RS resources, or the indexes of the N CSI-RS resources are arranged in an order from low to high of the measurement results corresponding to the N CSI-RS resources.

39. The method of claim 37 or 38, wherein the first information further comprises first measurement information, and the first measurement information is used for indicating the measurement results corresponding to the N CSI-RS resources.

40. The method of claim 39, wherein the measurement results corresponding to the N CSI-RS resources are greater than or equal to a first threshold value.

41. The method of claim 39 or 40, wherein the N CSI-RS resources correspond to first N CSI-RSs in the CSI-RSs received by the second terminal device which are arranged in the order from high to low of the measurement results.

42. The method of claim 39, wherein,

the N CSI-RS resources comprise N1 first-type CSI-RS resources and N2 second-type CSI-RS resources, wherein the N1 first-type CSI-RS resources correspond to CSI-RSs received by the second terminal device, or the N1 first-type CSI-RS resources correspond to CSI-RSs received by the second terminal device with measurement results greater than or equal to a first threshold value, indexes corresponding to the N2 second-type CSI-RS resources are determined by at least one CSI-RS resource in the N1 first-type CSI-RS resources, or the indexes corresponding to the N2 second-type CSI-RS resources are determined by at least one CSI-RS resource in the plurality of CSI-RS resources except the N1 first-type CSI-RS resources, measurement results corresponding to the N2 second-type CSI-RS resources are default values, N1 and N2 are positive integers, and N1+N2 = N.

43. The method of claim 42, wherein the default values are pre-configured or agreed based on a protocol, or the default values are configured by a network device, or the default values are configured by the first terminal device to the second terminal device, or the default values are configured by the second terminal device to the first terminal device, or the default values are configured by a third terminal device, and the third terminal device is a cluster header (CH) terminal of a communication group where the first terminal device and the second terminal device are located.

44. The method of claim 42 or 43, wherein the default values are less than or equal to a second threshold value, or the default values correspond to a negative infinity or infinity.

45. The method of any one of claims 39 to 44, wherein the first measurement information comprises quantization index information of measurement results corresponding to the N CSI-RS resources respectively.

46. The method of any one of claims 39 to 41, wherein the first measurement information comprises quantization index information of a first measurement result and N-1 pieces of differential quantization index information, and the first measurement result corresponds to a highest value among the measurement results corresponding to the N CSI-RS resources.

47. The method of claim 36, wherein the first information comprises indexes of N3 CSI-RS resources, and the N3 CSI-RS resources are determined by the second terminal device according to measurement results obtained by measuring received CSI-RSs, N3 < N, N is a number of CSI-RS resources that the second terminal device needs to feedback or report, N3 and N are positive integers, and N ≤ M.

48. The method of claim 47, wherein the N3 CSI-RS resources correspond to CSI-RSs received by the second terminal device, or the N3 CSI-RS resources correspond to CSI-RSs received by the second terminal device with corresponding measurement results greater than or equal to a first threshold value.

49. The method of claim 47 or 48, wherein the indexes of the N3 CSI-RS resources are arranged in an order from high to low of the measurement results corresponding to the N3 CSI-RS resources, or the indexes of the N3 CSI-RS resources are arranged in an order from low to high of the measurement results corresponding to the N3 CSI-RS resources.

50. The method of any one of claims 47 to 49, wherein the first information further comprises second measurement information, and the second measurement information is used for indicating measurement results corresponding to the N3 CSI-RS resources.

51. The method of claim 50, wherein the second measurement information comprises quantization index information of measurement results corresponding to the N3 CSI-RS resources respectively.

52. The method of claim 50 or 51, wherein the second measurement information comprises quantization index information of a second measurement result and N3-1 pieces of differential quantization index information, and the second measurement result corresponds to a highest value among the measurement results corresponding to the N3 CSI-RS resources.

53. The method of any one of claims 47 to 52, wherein the first information further comprises first indication information, and the first indication information is used for indicating a value of N3.

54. The method of any one of claims 37 to 53, wherein the first information further comprises second indication information, the second indication information is used for indicating a value of N, or the second indication information is used for indicating a number of CSI-RS resources fed back by the second terminal device to the first terminal device, or the second indication information for indicating a number of measurement results fed back by the second terminal device to the first terminal device.

55. The method of any one of claims 37 to 53, further comprising:
acquiring, by the second terminal device, fourth indication information, wherein the fourth indication information is used for indicating a value of the N.

56. The method of claim 55, wherein acquiring, by the second terminal device, the fourth indication information comprises:
acquiring, by the second terminal device, the fourth indication information according to pre-configuration information, or receiving, by the second terminal device, the fourth indication information transmitted by a network device, or receiving, by the second terminal device, the fourth indication information transmitted by the first terminal device, or receiving, by the second terminal device, the fourth indication information transmitted by the third terminal device, wherein the third terminal device is a CH terminal of a communication group where the first terminal device and the second terminal device are located.

57. The method of any one of claims 37 to 56, wherein the measurement results comprise a sidelink RSRP and/or a sidelink SINR.

**58.** The method of any one of claims 36 to 57, wherein the first information is carried by one of:
Sidelink Control Information (SCI), a Media Access Control Control Element (MAC CE), a Physical Sidelink Feedback Channel (PSFCH), or a PC5-Radio Resource Control (RRC) signaling.

**59.** The method of any one of claims 36 to 58, further comprising:
receiving, by the second terminal device, first sidelink configuration information transmitted by the first terminal device, wherein the first sideink configuration information is used for configuring at least one Transmission Configuration Indicator (TCI) state, the at least one TCI state comprises a first TCI state, a reference signal comprised in the first TCI state is a CSI-RS corresponding to a target CSI-RS resource, the target CSI-RS resource is determined by the first terminal device according to the first information, and a spatial domain transmission filter corresponding to the target CSI-RS resource is the target spatial domain transmission filter.

**60.** The method of claim 59, wherein a Quasi-co-located (QCL) type comprised in the first TCI state is QCL-TypeD.

**61.** The method of claim 59 or 60, further comprising:
receiving, by the second terminal device, fifth indication information transmitted by the first terminal device, wherein the fifth indication information is used for indicating the first TCI state.

**62.** The method of any one of claims 59 to 61, further comprising:
receiving, by the second terminal device, sidelink data transmitted by the first terminal device by using the target spatial domain transmission filter corresponding to the target CSI-RS resource.

**63.** The method of claim 35, further comprising:

transmitting, by the second terminal device, second information to the first terminal device,
wherein the second information is used for indicating that the CSI-RSs are not detected by the second terminal device, or the second information is used for indicating that measurement results corresponding to the CSI-RSs detected by the second terminal device are all less than a first threshold value, or the second information is used for indicating that the first terminal device re-transmits the M CSI-RSs.

**64.** The method of claim 63, further comprising:
receiving, by the second terminal device, the M CSI-RSs re-transmitted by the first terminal device.

**65.** The method of claim 40, 42, 48, or 63, wherein the first threshold value is pre-configured or agreed based on a protocol, or the first threshold value is configured by a network device, or the first threshold value is configured by the first terminal device.

**66.** The method of claim 44, wherein the second threshold value is pre-configured or agreed based on a protocol, or the second threshold value is configured by a network device, or the second threshold value is configured by the first terminal device.

**67.** A terminal device, wherein the terminal device is a first terminal device, and the terminal device comprises:

a communication unit, configured to transmit M Channel State Information Reference Signals (CSI-RSs) to a second terminal device by using spatial domain transmission filters, wherein the M CSI-RSs are used for selecting a target spatial domain transmission filter,
wherein the M CSI-RSs correspond to a plurality of CSI-RS resources in a target CSI-RS resource set, and M is a positive integer.

**68.** A terminal device, wherein the terminal device is a second terminal device, and the terminal device comprises:
a communication unit, configured to receive M Channel State Information Reference Signals (CSI-RSs) transmitted by a first terminal device by using spatial domain transmission filters, wherein the M CSI-RSs are used for selecting a target spatial domain transmission filter, the M CSI-RSs correspond to a plurality of CSI-RS resources in a target CSI-RS resource set, and M is a positive integer.

**69.** A terminal device comprising a processor and a memory, wherein the memory is configured to store computer programs, and the processor is configured to invoke and run the computer programs stored in the memory to perform the method of any one of claims 1 to 34, or perform the method of any one of claims 35 to 66.

70. A chip comprising a processor, wherein the processor is configured to invoke and run computer programs from a memory to cause a device on which the chip is mounted to perform the method of any one of claims 1 to 34, or perform the method of any one of claims 35 to 66.

71. A computer readable storage medium for storing computer programs, wherein the computer programs cause a computer to perform the method of any one of claims 1 to 34, or perform the method of any one of claims 35 to 66.

72. A computer program product comprising computer program instructions causing a computer to perform the method of any one of claims 1 to 34, or to perform the method of any one of claims 35 to 66.

73. A computer program causing a computer to perform the method of any one of claims 1 to 34, or perform the method of any one of claims 35 to 66.

**FIG. 1**

**FIG. 2**

Base station

Sidelink
communication

**FIG. 3**

Base sation

Sidelink
communication

**FIG. 4**

Base sation

Sidelink
communication

**FIG. 5**

UE1

Resource allocation    Resource allocation

UE2

Sidelink communication

UE3

**FIG. 6**

UE1                 UE2

◄——Data——►

**FIG. 7**

Communication group

UE2

UE1

UE3

UE4

**FIG. 8**

**FIG. 9**

(a)

(b)

## FIG. 10

FIG. 11

|
RRC
↓

| N candidate TCI states |

MAC
↓

| K activated TCI states |

DCI
↓

| One or two used TCI states |

**FIG. 12**

**200**

The first terminal device transmits M CSI-RSs to the second terminal device by using spatial domain transmission filters. The M CSI-RSs are used for selecting a target spatial domain transmission filter. The M CSI-RSs correspond to multiple CSI-RS resources in a target CSI-RS resource set, and M is a positive integer ⌐ S210

The second terminal device receives the M CSI-RSs transmitted by the first terminal device using the spatial domain transmission filters ⌐ S220

**FIG. 13**

First terminal
device

Second terminal
device

**FIG. 14**

Transmit CSI-RS 0 using spatial domain transmission filter 0    Transmit CSI-RS 1 using spatial domain transmission filter 1    Transmit CSI-RS 2 using spatial domain transmission filter 2    Transmit CSI-RS 3 using spatial domain transmission filter 3

0　1　2　3　4　5　6　7　8　9　10　11　12　13　14　15

The first terminal device transmits the sidelink configuration information to the second terminal device

The first terminal device uses different spatial domain transmission filters to transmit CSI-RSs in turn

The second terminal device feeds back CSI-RS resources and measurement results to the first terminal device

**FIG. 15**

| CSI-RS resource 2 | CSI-RS resource 3 | CSI-RS resource 1 |
|---|---|---|

**FIG. 16**

| CSI-RS resource 1 | CSI-RS resource 3 | CSI-RS resource 2 |
| --- | --- | --- |

**FIG. 17**

| CSI-RS resource 1 | CSI-RS resource 2 | CSI-RS resource 1 |
|---|---|---|

**FIG. 18**

| CSI-RS resource 1 | CSI-RS resource 2 | CSI-RS resource 1 | CSI-RS resource 2 |
|---|---|---|---|

**FIG. 19**

| CSI-RS resource 2 | RSRP2=-20dbm | CSI-RS resource 0 | RSRP0=default value |
|---|---|---|---|

**FIG. 20**

| CSI-RS resource 1 | RSRP1=-10dbm | CSI-RS resource 2 | RSRP2=-20dbm | CSI-RS resource 1 | RSRP1=default value |
|---|---|---|---|---|---|

**FIG. 21**

(a)

| N3=3 | CSI-RS k1 | RSRP k1 | Oct 1 |
| RSRP k1 | CSI-RS k2 | RSRP k2 | Oct 2 |
| RSRP k2 | CSI-RS k3 | RSRP k3 | Oct 3 |
| RSRP k3 | R | R | R | Oct 4 |

(b)

| N3=2 | CSI-RS k1 | RSRP k1 | Oct 1 |
| RSRP k1 | CSI-RS k2 | RSRP k2 | Oct 2 |
| RSRP k2 | R | R | R | R | Oct 3 |

(c)

| N3=1 | CSI-RS k1 | RSRP k1 | Oct 1 |
| RSRP k1 | R | R | R | R | R | Oct 2 |

(d)

| N3=0 | R | R | R | R | R | R | Oct 1 |

**FIG. 22**

**(a)**

| N3=3 | CSI-RS k1 | RSRP k1 | | Oct 1 |
| RSRP k1 | | CSI-RS k2 | D-RSRP k2 | Oct 2 |
| D-RSRP k2 | CSI-RS k3 | D-RSRP k3 | R | Oct 3 |

**(b)**

| N3=2 | CSI-RS k1 | RSRP k1 | | | | | Oct 1 |
| RSRP k1 | | CSI-RS k2 | D-RSRP k2 | | | | Oct 2 |
| D-RSRP k2 | R | R | R | R | R | R | R | Oct 3 |

**(c)**

| N3=1 | CSI-RS k1 | RSRP k1 | | | | | Oct 1 |
| RSRP k1 | | R | R | R | R | R | Oct 2 |

**(d)**

| N3=0 | R | R | R | R | R | R | Oct 1 |

## FIG. 23

First terminal
device

Second terminal
device

S11

S12

S13

S14

S15

**FIG. 24**

Terminal device 300

Communication unit 310

Processing unit 320

**FIG. 25**

Terminal device 400

Communication unit 410

**FIG. 26**

Communication device500

Memory
520

Processor
510

Transceiver
530

**FIG. 27**

Device600

Input
interface
630

Processor
610

Memory
620

Output
Interface
640

**FIG. 28**

Communication system
700

| First terminal device | 710 | Second terminal device | 720 |

**FIG. 29**

## INTERNATIONAL SEARCH REPORT

| International application No. |
|---|
| **PCT/CN2021/113220** |

| A. | CLASSIFICATION OF SUBJECT MATTER |
|---|---|
| | H04W 72/04(2009.01)i; H04W 72/12(2009.01)i |

According to International Patent Classification (IPC) or to both national classification and IPC

| B. | FIELDS SEARCHED |
|---|---|

Minimum documentation searched (classification system followed by classification symbols)
   H04W; H04L

Documentation searched other than minimum documentation to the extent that such documents are included in the fields searched

Electronic data base consulted during the international search (name of data base and, where practicable, search terms used)
   CNKI, CNPAT, EPODOC, WPI, 3GPP: 信道状态信息参考信号, 信道状态信息, 参考信号, 空域发送滤波器, 发送波束, 空间关系, 空间配置, 空间滤波器, 空间参数, 资源集合, 接收功率, Channel State Information Reference Signal, CSI-RS, beam, spatial domain transmission filter, Spatial relation, spatial setting, Reference Signal Received Power, RSRP

| C. | DOCUMENTS CONSIDERED TO BE RELEVANT |
|---|---|

| Category* | Citation of document, with indication, where appropriate, of the relevant passages | Relevant to claim No. |
|---|---|---|
| X | INTEL CORPORTATION. "Remaining Issues on Beam Management" *3GPP TSG RAN WG1 Meeting #92bis R1-1804714*, 20 April 2018 (2018-04-20), sections 2.1-4.3 | 1-73 |
| A | WO 2021143684 A1 (VIVO COMMUNICATION TECHNOLOGY CO., LTD.) 22 July 2021 (2021-07-22) entire document | 1-73 |
| A | CN 108282321 A (HUAWEI TECHNOLOGIES CO., LTD.) 13 July 2018 (2018-07-13) entire document | 1-73 |
| A | CN 112615655 A (OPPO GUANGDONG MOBILE TELECOMMUNICATIONS CO., LTD.) 06 April 2021 (2021-04-06) entire document | 1-73 |
| A | CN 109151887 A (HUAWEI TECHNOLOGIES CO., LTD.) 04 January 2019 (2019-01-04) entire document | 1-73 |
| A | CN 113163438 A (VIVO COMMUNICATION TECHNOLOGY CO., LTD.) 23 July 2021 (2021-07-23) entire document | 1-73 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 May 2022** | **18 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/113220**

| Patent document cited in search report | | | Publication date (day/month/year) | Patent family member(s) | | | Publication date (day/month/year) |
|---|---|---|---|---|---|---|---|
| WO | 2021143684 | A1 | 22 July 2021 | CN | 113132037 | A | 16 July 2021 |
| CN | 108282321 | A | 13 July 2018 | US | 2019335474 | A1 | 31 October 2019 |
| | | | | WO | 2018126764 | A1 | 12 July 2018 |
| | | | | IN | 201947019189 | A | 24 May 2019 |
| | | | | EP | 3531596 | A1 | 28 August 2019 |
| | | | | VN | 65827 | A | 25 September 2019 |
| CN | 112615655 | A | 06 April 2021 | WO | 2018157296 | A1 | 07 September 2018 |
| | | | | TW | 201834414 | A | 16 September 2018 |
| | | | | CN | 110301145 | A | 01 October 2019 |
| | | | | KR | 20190120230 | A | 23 October 2019 |
| | | | | IN | 201917036638 | A | 15 November 2019 |
| | | | | US | 2019379483 | A1 | 12 December 2019 |
| | | | | EP | 3582516 | A1 | 18 December 2019 |
| | | | | JP | 2020511821 | W | 16 April 2020 |
| CN | 109151887 | A | 04 January 2019 | EP | 3637838 | A1 | 15 April 2020 |
| | | | | US | 2020119797 | A1 | 16 April 2020 |
| | | | | WO | 2018228571 | A1 | 20 December 2018 |
| | | | | IN | 202037001754 | A | 14 February 2020 |
| CN | 113163438 | A | 23 July 2021 | WO | 2021147913 | A1 | 29 July 2021 |

Form PCT/ISA/210 (patent family annex) (January 2015)